# EUROPEAN PATENT APPLICATION

(11) **EP 4 815 106 A1**
(43) Date of publication of application: **30.09.2026**
(21) Application number: 24895850.6
(22) Date of filing: 03.09.2024
(51) Int. Cl.: H01M 10/613, H01M 10/615, H01M 10/617

(54) **BATTERY THERMAL MANAGEMENT SYSTEM AND ELECTRIC DEVICE**

(30) Priority: 28.11.2023 CN 202311615729
(71) Applicant: BYD Company Limited, Shenzhen, Guangdong 518118 (CN)
(72) Inventor: LIU, Zhilin, Shenzhen, Guangdong 518118 (CN); YU, Yelong, Shenzhen, Guangdong 518118 (CN); FENG, Jiamao, Shenzhen, Guangdong 518118 (CN); XIONG, Bojun, Shenzhen, Guangdong 518118 (CN); PENG, Qingbo, Shenzhen, Guangdong 518118 (CN)
(74) Representative: Taor, Simon Edward William
(86) International application number: PCT/CN2024/116675
(87) International publication number: WO 2025/112751

(57) **Abstract**

A battery thermal management system and an electrical device are provided. The battery thermal management system includes a heat exchange module, a battery temperature control module, and a heater used as a heat source. The battery temperature control module includes a plurality of battery heat exchange parts. The heat exchange module has a first heat exchanger used as a cold source. The first heat exchanger and the heater are selectively connected to the battery temperature control module, and the plurality of battery heat exchange parts are selectively connected to heat exchange medium circulation of the battery temperature control module separately.

## Description

### CROSS-REFERENCE TO RELATED APPLICATIONS

This disclosure claims priority to Chinese Patent Application No. 202311615729.5, filed with the China National Intellectual Property Administration on November 28, 2023 and entitled "BATTERY THERMAL MANAGEMENT SYSTEM AND ELECTRICAL DEVICE", which is incorporated herein by reference in its entirety.

### TECHNICAL FIELD

This disclosure relates to the field of battery thermal management technology, and more specifically, to a battery thermal management system and an electrical device.

### BACKGROUND

In a liquid cooling and liquid heating thermal management system of a new energy vehicle battery, a battery temperature depends on a battery system heat exchanger. A heat exchange medium in the battery system heat exchanger can absorb heat provided by a heater to heat the battery, or release heat to a refrigerant through a plate heat exchanger of an air conditioning system to cool the battery, so as to keep the battery at a specific temperature. A structure of the battery system heat exchanger provided in the related technology is simple, and can only achieve cooling or heating of the battery as a whole. However, in reality, required cooling and heating loads of different parts of the battery are not the same, resulting in a large temperature difference between different parts of the battery, which affects performance of the battery.

### SUMMARY

The purpose of this disclosure is to provide a battery thermal management system and an electrical device to solve the technical problem of a large temperature difference between different parts of a battery in a related technology.

To achieve the above objectives, this disclosure provides a battery thermal management system, including a heat exchange module, a battery temperature control module, and a heater used as a heat source. The battery temperature control module includes a plurality of battery heat exchange parts. The heat exchange module has a first heat exchanger used as a cold source. The first heat exchanger and the heater are selectively connected to the battery temperature control module, and the plurality of battery heat exchange parts are selectively connected to heat exchange medium circulation of the battery temperature control module separately.

According to an embodiment of this disclosure, the plurality of battery heat exchange parts include a first battery heat exchange part and a second battery heat exchange part, the battery temperature control module includes a battery heat exchanger, a plurality of flow channels of the battery heat exchanger are divided into a first flow channel region and a second flow channel region that are independent of each other, the first flow channel region forms the first battery heat exchange part, and the second flow channel region forms the second battery heat exchange part.

According to an embodiment of this disclosure, the plurality of battery heat exchange parts include a first battery heat exchange part and a second battery heat exchange part, the battery temperature control module includes a first battery heat exchanger and a second battery heat exchanger, the first battery heat exchanger forms the first battery heat exchange part, and the second battery heat exchanger forms the second battery heat exchange part.

According to an embodiment of this disclosure, the plurality of battery heat exchange parts include the first battery heat exchange part and the second battery heat exchange part, where the first battery heat exchange part and the second battery heat exchange part are arranged in parallel.

According to an embodiment of this disclosure, the plurality of battery heat exchange parts include the first battery heat exchange part and the second battery heat exchange part, where the first battery heat exchange part and the second battery heat exchange part are selectively connected in parallel or in series.

According to an embodiment of this disclosure, the heater and the first heat exchanger are disposed on a main road located upstream of a branch port, and the first battery heat exchange part and the second battery heat exchange part share the heater and the first heat exchanger.

According to an embodiment of this disclosure, the battery thermal management system includes a first heater and a second heater, the first heater and the second heater are respectively disposed on corresponding parallel branches to heat heat exchange media flowing into the first battery heat exchange part and the second battery heat exchange part respectively.

According to an embodiment of this disclosure, first heat exchangers are respectively disposed on parallel branches on which the first battery heat exchanger and the second battery heat exchanger are located, and the first heat exchangers are connected in parallel on the corresponding parallel branches.

According to an embodiment of this disclosure, the battery thermal management system further includes a third heater, the third heater is disposed on a main road located upstream of a branch port, and the first heater, the second heater, and the third heater are selectively connected to the battery temperature control module.

According to an embodiment of this disclosure, the plurality of battery heat exchange parts include the first battery heat exchange part and the second battery heat exchange part, where the first battery heat exchange part and the second battery heat exchange part are respectively disposed in different parts of a battery.

According to an embodiment of this disclosure, the battery temperature control module includes a power component configured to drive a heat exchange medium to circulate and the first battery heat exchanger and the second battery heat exchanger connected in parallel, a first valve is disposed on a first parallel branch on which the first battery heat exchanger is located, a second valve is disposed on a second parallel branch on which the second battery heat exchanger is located, and the first heat exchanger and the heater are disposed on the main road located upstream of the branch port and are connected in parallel through a first three-way valve.

According to an embodiment of this disclosure, the battery thermal management system has at least one of the following modes:
a first liquid cooling mode, where the first three-way valve connects the first heat exchanger and the power component, the first valve is turned on, the second valve is turned off, and the power component drives the heat exchange medium to flow through the first heat exchanger and the first battery heat exchanger;
a second liquid cooling mode, where the first three-way valve connects the first heat exchanger and the power component, the first valve is turned off, the second valve is turned on, and the power component drives the heat exchange medium to flow through the first heat exchanger and the second battery heat exchanger;
a third liquid cooling mode, where the first three-way valve connects the first heat exchanger and the power component, the first valve is turned on, the second valve is turned on, and the power component drives the heat exchange medium to flow through the first heat exchanger and then split into two flows, simultaneously flowing through the first battery heat exchanger and the second battery heat exchanger;
a fourth liquid cooling mode, where the first three-way valve connects the first heat exchanger and the power component; within a first preset time period, the first valve is turned on, the second valve is turned off, and the power component drives the heat exchange medium to flow through the first heat exchanger and the first battery heat exchanger; and within a second preset time period, the first valve is turned off, the second valve is turned on, and the power component drives the heat exchange medium to flow through the first heat exchanger and the second battery heat exchanger;
a first liquid heating mode, where the first three-way valve connects the heater and the power component, the heater performs heating, the first valve is turned on, the second valve is turned off, and the power component drives the heat exchange medium to flow through the heater and the first battery heat exchanger;
a second liquid heating mode, where the first three-way valve connects the heater and the power component, the heater performs heating, the first valve is turned off, the second valve is turned on, and the power component drives the heat exchange medium to flow through the heater and the second battery heat exchanger;
a third liquid heating mode, where the first three-way valve connects the heater and the power component, the heater performs heating, the first valve is turned on, the second valve is turned on, and the power component drives the heat exchange medium to flow through the heater and then split into two flows, simultaneously flowing through the first battery heat exchanger and the second battery heat exchanger;
a fourth liquid heating mode, where the first three-way valve connects the heater and the power component, and the heater performs heating; within a first preset time period, the first valve is turned on, the second valve is turned off, and the power component drives the heat exchange medium to flow through the heater and the first battery heat exchanger; and within a second preset time period, the first valve is turned off, the second valve is turned on, and the power component drives the heat exchange medium to flow through the heater and the second battery heat exchanger;
a uniform temperature mode, where the first three-way valve connects the heater and the power component, the heater is turned off from heating, the first valve is turned on, the second valve is turned on, and the power component drives the heat exchange medium to flow between the first battery heat exchanger and the second battery heat exchanger; and
an energy-saving mode, where the first three-way valve connects the heater and the power component, the heater is turned off from heating, and the power component drives the heat exchange medium to flow in the first battery heat exchanger or the second battery heat exchanger.

According to an embodiment of this disclosure, the battery temperature control module includes a power component configured to drive a heat exchange medium to circulate and the first battery heat exchanger and the second battery heat exchanger connected in parallel, a first valve is disposed on a first parallel branch on which the first battery heat exchanger is located, a second valve is disposed on a second parallel branch on which the second battery heat exchanger is located, the first heat exchanger is located on the main road located upstream of the branch port and is selectively connected through a first three-way valve, the battery thermal management system includes the first heater and the second heater, the first heater is disposed on the first parallel branch through a second three-way valve, and the second heater is disposed on the second parallel branch through a third three-way valve.

According to an embodiment of this disclosure, the battery thermal management system has at least one of the following modes:
a first liquid cooling mode, where the first three-way valve connects the first heat exchanger and the power component, the second three-way valve is short-circuited to the first heater, the third three-way valve is turned off, the first valve is turned on, the second valve is turned off, and the power component drives the heat exchange medium to flow through the first heat exchanger and the first battery heat exchanger;
a second liquid cooling mode, where the first three-way valve connects the first heat exchanger and the power component, the second three-way valve is turned off, the third three-way valve is short-circuited to the second heater, the first valve is turned off, the second valve is turned on, and the power component drives the heat exchange medium to flow through the first heat exchanger and the second battery heat exchanger;
a third liquid cooling mode, where the first three-way valve connects the first heat exchanger and the power component, the second three-way valve is short-circuited to the first heater, the third three-way valve is short-circuited to the second heater, the first valve is turned on, the second valve is turned on, and the power component drives the heat exchange medium to flow through the first heat exchanger and then split into two flows, simultaneously flowing through the first battery heat exchanger and the second battery heat exchanger;
a fourth liquid cooling mode, where the first three-way valve connects the first heat exchanger and the power component; within a first preset time period, the second three-way valve is short-circuited to the first heater, the third three-way valve is turned off, the first valve is turned on, the second valve is turned off, and the power component drives the heat exchange medium to flow through the first heat exchanger and the first battery heat exchanger; and within a second preset time period, the second three-way valve is turned off, the third three-way valve is short-circuited to the second heater, the first valve is turned off, the second valve is turned on, and the power component drives the heat exchange medium to flow through the first heat exchanger and the second battery heat exchanger;
a first liquid heating mode, where the first three-way valve is short-circuited to the first heat exchanger, the second three-way valve is directed to the first heater, the third three-way valve is turned off, the first heater performs heating, the first valve is turned on, the second valve is turned off, and the power component drives the heat exchange medium to flow through the first heater and the first battery heat exchanger;
a second liquid heating mode, where the first three-way valve is short-circuited to the first heat exchanger, the second three-way valve is turned off, the third three-way valve is directed to the second heater, the second heater performs heating, the first valve is turned off, the second valve is turned on, and the power component drives the heat exchange medium to flow through the second heater and the second battery heat exchanger;
a third liquid heating mode, where the first three-way valve is short-circuited to the first heat exchanger, the second three-way valve is directed to the first heater, the third three-way valve is directed to the second heater, the first heater and the second heater heat perform heating, the first valve is turned on, and the second valve is turned on, and the power component drives the heat exchange medium to flow through the heater and then split into two flows, simultaneously flowing through the first battery heat exchanger and the second battery heat exchanger;
a fourth liquid heating mode, where the first three-way valve is short-circuited to the first heat exchanger; within a first preset time period, the second three-way valve is directed to the first heater, the third three-way valve is turned off, the first heater performs heating, the first valve is turned on, the second valve is turned off, and the power component drives the heat exchange medium to flow through the first heater and the first battery heat exchanger; and within a second preset time period, the first three-way valve is short-circuited to the first heat exchanger, the second three-way valve is turned off, the third three-way valve is directed to the second heater, the second heater performs heating, the first valve is turned off, the second valve is turned on, and the power component drives the heat exchange medium to flow through the second heater and the second battery heat exchanger;
a uniform temperature mode, where the first three-way valve is short-circuited to the first heat exchanger, the second three-way valve is short-circuited to the first heater, the third three-way valve is short-circuited to the second heater, the first valve is turned on, the second valve is turned on, and the power component drives the heat exchange medium to flow between the first battery heat exchanger and the second battery heat exchanger; and
an energy-saving mode, where the first three-way valve is short-circuited to the first heat exchanger, the second three-way valve is short-circuited to the first heater, the third three-way valve is short-circuited to the second heater, and the power component drives the heat exchange medium to flow in the first battery heat exchanger or the second battery heat exchanger.

According to an embodiment of this disclosure, the battery temperature control module includes a power component configured to drive a heat exchange medium to circulate and the first battery heat exchanger and the second battery heat exchanger connected in parallel, a first valve is disposed on a first parallel branch on which the first battery heat exchanger is located, a second valve is disposed on a second parallel branch on which the second battery heat exchanger is located, and the first heat exchanger and/or the heater are/is disposed between the power component and the battery heat exchanger.

According to an embodiment of this disclosure, the battery thermal management system includes a sixth valve connecting the first valve and the power component.

The battery thermal management system has a first mode in which the first valve and the sixth valve are turned on, and the power component drives the heat exchange medium to flow through the first heat exchanger and/or the heater and then into the first battery heat exchanger.

According to an embodiment of this disclosure, the battery thermal management system includes a second parallel loop connecting the second valve and the power component, a seventh valve is disposed on the second parallel loop, and a fourth valve is disposed between the first parallel branch and the second battery heat exchanger.

The battery thermal management system has a second mode in which the fourth valve, the second valve, and the seventh valve are turned on, and the power component drives the heat exchange medium to flow through the first heat exchanger and/or the heater and then into the second battery heat exchanger.

According to an embodiment of this disclosure, the battery thermal management system includes the sixth valve connecting the first valve and the power component, the seventh valve is disposed on the second parallel loop connecting the second valve and the power component, and the fourth valve is disposed between the first parallel branch and the second battery heat exchanger.

The battery thermal management system has a third mode in which the first valve, the sixth valve, the second valve, the seventh valve, and the fourth valve are turned on. The power component drives the heat exchange medium to flow through the first heat exchanger and/or the heater and then split into two flows, simultaneously flowing through the first battery heat exchanger and the second battery heat exchanger.

According to an embodiment of this disclosure, the battery thermal management system further includes a third parallel branch connected in parallel between the first battery heat exchanger and the second battery heat exchanger, a third valve is disposed on the third parallel branch, and the seventh valve is disposed on the second parallel loop connecting the second valve and the power component.

The battery thermal management system has a fourth mode in which the first valve, the third valve, the second valve, and the fifth valve are turned on, and the power component drives the heat exchange medium to flow through the first heat exchanger and/or the heater, the first battery heat exchanger, and the second battery heat exchanger in sequence.

According to an embodiment of this disclosure, the heater and/or the first heat exchanger are disposed on the main road located upstream of the branch port and are connected in parallel through a first three-way valve.

According to an embodiment of this disclosure, the battery thermal management system includes the first heater and the second heater, the first heater and/or the first heat exchanger are disposed on the first parallel branch through a second three-way valve, and the second heater and/or the first heat exchanger are disposed on the second parallel branch through a third three-way valve.

According to an embodiment of this disclosure, the battery temperature control module includes the first battery heat exchanger and the second battery heat exchanger connected in parallel, the first valve is disposed on the first parallel branch on which the first battery heat exchanger is located, the second valve is disposed on the second parallel branch on which the second battery heat exchanger is located, and the first heat exchanger and the heater are disposed on the main road located upstream of the branch port and are connected in parallel through the first three-way valve.

The battery thermal management system further includes the third parallel branch connected in parallel between the first battery heat exchanger and the second battery heat exchanger, and the third valve is disposed on the third parallel branch.

The fourth valve is disposed on a pipeline connecting the first parallel branch and the third parallel branch, and a fifth valve is disposed on a pipeline connecting the second parallel branch and the third parallel branch.

The sixth valve is disposed on the first parallel loop connecting the first valve and the power component, the seventh valve is disposed on the second parallel loop connecting the second valve and the power component, and the first parallel loop and the second parallel loop are arranged in parallel.

According to an embodiment of this disclosure, the battery thermal management system has at least one of the following modes:
the first liquid cooling mode, where the first three-way valve connects the first heat exchanger and the power component, the first valve and the sixth valve are turned on, remaining valves are turned off, and the power component drives the heat exchange medium to flow through the first heat exchanger and the first battery heat exchanger;
the second liquid cooling mode, where the first three-way valve connects the first heat exchanger and the power component, the fourth valve, the second valve, and the seventh valve are turned on, remaining valves are turned off, and the power component drives the heat exchange medium to flow through the first heat exchanger and the second battery heat exchanger;
the third liquid cooling mode, where the first three-way valve connects the first heat exchanger and the power component, the first valve, the sixth valve, the second valve, the seventh valve, and the fourth valve are turned on, remaining valves are turned off, and the power component drives the heat exchange medium to flow through the first heat exchanger and then split into two flows, simultaneously flowing through the first battery heat exchanger and the second battery heat exchanger;
the fourth liquid cooling mode, where the first three-way valve connects the first heat exchanger and the power component, the first valve, the third valve, the second valve, and the fifth valve are turned on, remaining valves are turned off, and the power component drives the heat exchange medium to flow through the first heat exchanger, the first battery heat exchanger, and the second battery heat exchanger in sequence;
a fifth liquid cooling mode, where the first three-way valve connects the first heat exchanger and the power component; within the first preset time period, the first valve and the sixth valve are turned on, remaining valves are turned off, and the power component drives the heat exchange medium to flow through the first heat exchanger and the first battery heat exchanger; and within the second preset time period, the fourth valve, the second valve, and the seventh valve are turned on, remaining valves are turned off, and the power component drives the heat exchange medium to flow through the first heat exchanger and the second battery heat exchanger;
the first liquid heating mode, where the first three-way valve connects the heater and the power component, the heater performs heating, the first valve and the sixth valve are turned on, remaining valves are turned off, and the power component drives the heat exchange medium to flow through the heater and the first battery heat exchanger;
the second liquid heating mode, where the first three-way valve connects the heater and the power component, the heater performs heating, the fourth valve, the second valve, and the seventh valve are turned on, remaining valves are turned off, and the power component drives the heat exchange medium to flow through the heater and the second battery heat exchanger;
the third liquid heating mode, where the first three-way valve connects the heater and the power component, the heater performs heating, the first valve, the sixth valve, the second valve, the seventh valve, and the fourth valve are turned on, remaining valves are turned off, and the power component drives the heat exchange medium to flow through the heater and then split into two flows, simultaneously flowing through the first battery heat exchanger and the second battery heat exchanger;
the fourth liquid heating mode, where the first three-way valve connects the heater and the power component, the heater performs heating, the first valve, the third valve, the second valve, and the fifth valve are turned on, remaining valves are turned off, and the power component drives the heat exchange medium to flow through the heater, the first battery heat exchanger, and the second battery heat exchanger in sequence;
a fifth liquid heating mode, where the first three-way valve connects the heater and the power component, and the heater performs heating; within the first preset time period, the first valve and the sixth valve are turned on, remaining valves are turned off, and the power component drives the heat exchange medium to flow through the heater and the first battery heat exchanger; and within the second preset time period, the fourth valve, the second valve, and the seventh valve are turned on, remaining valves are turned off, and the power component drives the heat exchange medium to flow through the heater and the second battery heat exchanger;
a first uniform temperature mode, where the first three-way valve connects the heater and the power component, the heater is turned off, the first valve, the sixth valve, the second valve, the seventh valve, and the fourth valve are turned on, remaining valves are turned off, and the power component drives the heat exchange medium to simultaneously flow through the first battery heat exchanger and the second battery heat exchanger;
a second uniform temperature mode, where the first three-way valve connects the heater and the power component, the heater is turned off, the first valve, the third valve, the second valve, and the fifth valve are turned on, remaining valves are turned off, and the power component drives the heat exchange medium to flow through the first battery heat exchanger and the second battery heat exchanger in sequence; and
the energy-saving mode, where the first three-way valve connects the heater and the power component, the heater is turned off from heating, and the power component drives the heat exchange medium to flow in the first battery heat exchanger or the second battery heat exchanger.

According to an embodiment of this disclosure, the battery temperature control module includes the power component configured to drive a heat exchange medium to circulate and the first battery heat exchanger and the second battery heat exchanger connected in parallel, the first valve is disposed on the first parallel branch on which the first battery heat exchanger is located, and the second valve is disposed on a second parallel branch on which the second battery heat exchanger is located.

The first heat exchanger is located on the main road located upstream of the branch port and is selectively connected through the first three-way valve, the battery thermal management system includes the first heater and the second heater, the first heater is disposed on the first parallel branch through the second three-way valve, and the second heater is disposed on the second parallel branch through the third three-way valve.

The battery thermal management system further includes the third parallel branch connected in parallel between the first battery heat exchanger and the second battery heat exchanger, and the third valve is disposed on the third parallel branch.

The fourth valve is disposed on the pipeline connecting the first parallel branch and the third parallel branch, and the fifth valve is disposed on the pipeline connecting the second parallel branch and the third parallel branch.

The sixth valve is disposed on the first parallel loop connecting the first valve and the power component, the seventh valve is disposed on the second parallel loop connecting the second valve and the power component, and the first parallel loop and the second parallel loop are arranged in parallel.

According to an embodiment of this disclosure, the battery thermal management system has at least one of the following modes:
the first liquid cooling mode, where the first three-way valve connects the first heat exchanger and the power component, the second three-way valve is short-circuited to the first heater, the third three-way valve is turned off, the first valve and the sixth valve are turned on, remaining valves are turned off, and the power component drives the heat exchange medium to flow through the first heat exchanger and the first battery heat exchanger;
the second liquid cooling mode, where the first three-way valve connects the first heat exchanger and the power component, the second three-way valve is turned off, the third three-way valve is short-circuited to the second heater, the fourth valve, the second valve, and the seventh valve are turned on, remaining valves are turned off, and the power component drives the heat exchange medium to flow through the first heat exchanger and the second battery heat exchanger;
the third liquid cooling mode, where the first three-way valve connects the first heat exchanger and the power component, the second three-way valve is short-circuited to the first heater, the third three-way valve is short-circuited to the second heater, the first valve, the sixth valve, the second valve, the seventh valve, and the fourth valve are turned on, remaining valves are turned off, and the power component drives the heat exchange medium to flow through the first heat exchanger and then split into two flows, simultaneously flowing through the first battery heat exchanger and the second battery heat exchanger;
the fourth liquid cooling mode, where the first three-way valve connects the first heat exchanger and the power component, the second three-way valve is short-circuited to the first heater, the third three-way valve is short-circuited to the second heater, the first valve, the third valve, the second valve, and the fifth valve are turned on, remaining valves are turned off, and the power component drives the heat exchange medium to flow through the first heat exchanger, the first battery heat exchanger, and the second battery heat exchanger in sequence;
the fifth liquid cooling mode, where the first three-way valve connects the first heat exchanger and the power component; within the first preset time period, the second three-way valve is short-circuited to the first heater, the third three-way valve is turned off, the first valve and the sixth valve are turned on, remaining valves are turned off, and the power component drives the heat exchange medium to flow through the first heat exchanger and the first battery heat exchanger; and within the second preset time period, the second three-way valve is turned off, the third three-way valve is short-circuited to the second heater, the fourth valve, the second valve, and the seventh valve are turned on, remaining valves are turned off, and the power component drives the heat exchange medium to flow through the first heat exchanger and the second battery heat exchanger;
the first liquid heating mode, where the first three-way valve is short-circuited to the first heat exchanger, the second three-way valve is directed to the first heater, the third three-way valve is turned off, the first heater performs heating, the first valve and the sixth valve are turned on, remaining valves are turned off, and the power component drives the heat exchange medium to flow through the first heater and the first battery heat exchanger;
the second liquid heating mode, where the first three-way valve is short-circuited to the first heat exchanger, the second three-way valve is turned off, the third three-way valve is directed to the second heater, the second heater performs heating, the fourth valve, the second valve, and the seventh valve are turned on, remaining valves are turned off, and the power component drives the heat exchange medium to flow through the heater and the second battery heat exchanger;
the third liquid heating mode, where the first three-way valve is short-circuited to the first heat exchanger, the second three-way valve is directed to the first heater, the third three-way valve is directed to the second heater, the first heater and the second heater perform heating, the first valve, the sixth valve, the second valve, the seventh valve, and the fourth valve are turned on, remaining valves are turned off, and the power component drives the heat exchange medium to flow into two flows, respectively flowing into the first heater and the second heater for heating, and simultaneously flowing through the first battery heat exchanger and the second battery heat exchanger;
the fourth liquid heating mode, where the first three-way valve is short-circuited to the first heat exchanger, the second three-way valve is directed to the first heater, the third three-way valve is directed to the second heater, the first heater and the second heater perform heating, the first valve, the third valve, the second valve, and the fifth valve are turned on, remaining valves are turned off, and the power component drives the heat exchange medium to flow through the first heater, the first battery heat exchanger, the second heater, and the second battery heat exchanger in sequence;
the fifth liquid heating mode, where the first three-way valve is short-circuited to the first heat exchanger; within the first preset time period, the second three-way valve is directed to the first heater, the third three-way valve is turned off, the first heater performs heating, the first valve and the sixth valve are turned on, remaining valves are turned off, and the power component drives the heat exchange medium to flow through the first heater and the first battery heat exchanger; and within the second preset time period, the second three-way valve is turned off, the third three-way valve is directed to the second heater, the second heater is heated, the fourth valve, the second valve, and the seventh valve are turned on, remaining valves are turned off, and the power component drives the heat exchange medium to flow through the heater and the second battery heat exchanger;
the first uniform temperature mode, where the first three-way valve is short-circuited to the first heat exchanger, the second three-way valve is short-circuited to the first heater, the third three-way valve is short-circuited to the second heater, the first valve, the sixth valve, the second valve, the seventh valve, and the fourth valve are turned on, remaining valves are turned off, and the power component drives the heat exchange medium to simultaneously flow through the first battery heat exchanger and the second battery heat exchanger;
the second uniform temperature mode, where the first three-way valve is short-circuited to the first heat exchanger, the second three-way valve is short-circuited to the first heater, the third three-way valve is short-circuited to the second heater, the first valve, the third valve, the second valve, and the seventh valve are turned on, remaining valves are turned off, and the power component drives the heat exchange medium to flow through the first battery heat exchanger and the second battery heat exchanger in sequence; and
the energy-saving mode, where the first three-way valve is short-circuited to the first heat exchanger, the second three-way valve is short-circuited to the first heater, the third three-way valve is short-circuited to the second heater, and the power component drives the heat exchange medium to flow in the first battery heat exchanger or the second battery heat exchanger.

According to an embodiment of this disclosure, the heat exchange module includes a compressor, an ambient heat exchanger, an expansion valve, the first heat exchanger and the second heat exchanger connected in sequence, and a four-way reversing valve is disposed between the compressor and the ambient heat exchanger.

According to an embodiment of this disclosure, the first heat exchanger and the second heat exchanger are connected in parallel, a first electronic expansion valve is disposed on a pipeline on which the first heat exchanger is disposed, and a second electronic expansion valve is disposed on a pipeline on which the second heat exchanger is disposed.

According to an embodiment of this disclosure, in the liquid heating mode:
the first electronic expansion valve is turned off, and the battery temperature control module and the heat exchange module are independent of each other; and
the first electronic expansion valve is turned on, the first heat exchanger is connected to the battery temperature control module, and part of heat from the battery temperature control module is used for the heat exchange module.

According to an embodiment of this disclosure, the battery thermal management system further includes a temperature detection element disposed upstream or downstream of the plurality of battery heat exchange parts to control, based on information obtained by the temperature detection element, whether the plurality of battery heat exchange parts work.

According to a second aspect of this disclosure, an electrical appliance is also provided, including the battery thermal management system.

In the battery thermal management system disclosed herein, the plurality of battery heat exchange parts correspond to different parts of the battery. The plurality of battery heat exchange parts are independent of each other, and a flow rate and circulation time of a heat exchange medium in each battery heat exchange part can be controlled individually. Flow of heat exchange media in different battery heat exchange parts is controlled, so that a temperature of each part of the battery can be adjusted, thereby achieving temperature equalization. The first heat exchanger used as the cold source and the heater used as the heat source are selectively connected to the battery temperature control module. The heat exchange medium cooled by the first heat exchanger (the heat exchange medium currently is at a low temperature) can selectively flow into at least one of the plurality of battery heat exchange parts to absorb heat from the battery and cool the battery. The heat exchange medium heated by the heater (the heat exchange medium currently is at a high temperature) can selectively flow into at least one of the plurality of battery heat exchange parts to release heat and heat the battery. The heat exchange medium in the battery heat exchange part is heated or cooled, so that a battery heating and cooling processes can be flexibly adjusted and precisely controlled, reducing a temperature difference between different parts of the battery. Meanwhile, a flow channel of each battery heat exchange part is shortened, flow resistance is reduced, a pressure drop of the heat exchange medium at an inlet/outlet is significantly reduced, a temperature drop is reduced, the battery temperature difference is further reduced, and overall performance of the battery is improved.

Other features and advantages of this disclosure will be described in detail in the following specific implementations.

### BRIEF DESCRIPTION OF DRAWINGS

The accompanying drawings are provided to further understand this disclosure and form a part of this specification, and are used together with the following description of embodiments to explain this disclosure, but do not constitute a limitation thereof. In the accompanying drawings:
FIG. 1 is a diagram of a battery thermal management system according to a related embodiment of this disclosure;
FIG. 1a is a diagram of a battery thermal management system (in a liquid cooling mode) according to a related embodiment of this disclosure;
FIG. 1b is a diagram of a battery thermal management system (in a liquid heating mode) according to a related embodiment of this disclosure;
FIG. 2 is a diagram of a battery thermal management system according to a first example embodiment of this disclosure;
FIG. 2a to FIG. 2h are diagrams of the battery thermal management system in different operating modes according to the first example embodiment of this disclosure;
FIG. 3 is a diagram of a battery thermal management system according to a second example embodiment of this disclosure;
FIG. 3a to FIG. 3g are diagrams of the battery thermal management system in different operating modes according to the second example embodiment of this disclosure;
FIG. 4 is a diagram of a battery thermal management system according to a third example embodiment of this disclosure;
FIG. 4a to FIG. 4j are diagrams of the battery thermal management system in different operating modes according to the third example embodiment of this disclosure;
FIG. 5 is a diagram of a battery thermal management system according to a fourth example embodiment of this disclosure;
FIG. 5a to FIG. 5j are diagrams of the battery thermal management system in different operating modes according to the fourth example embodiment of this disclosure;
FIG. 6 is a diagram of a battery thermal management system according to a fifth example embodiment of this disclosure; and

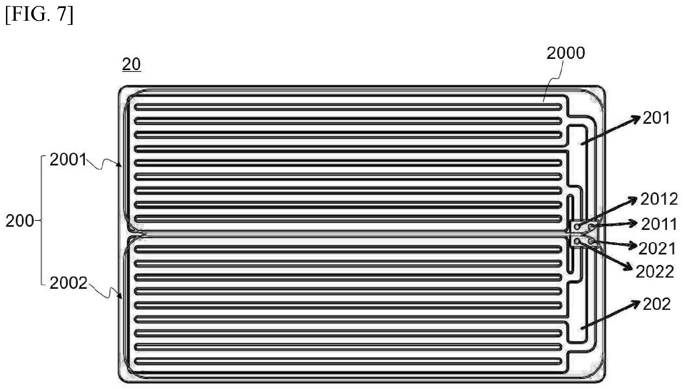

FIG. 7 is a diagram of a battery heat exchanger in a battery thermal management system according to an example embodiment of this disclosure.

### Reference numerals

1: heat exchange module; 10: battery system heat exchanger; 11: first heat exchanger; 12: second heat exchanger; 13: ambient heat exchanger; 14: compressor; 15: reversing valve; 16: first electronic expansion valve; 17: second electronic expansion valve; 18: expansion valve; 2: battery temperature control module; 20: battery heat exchanger; 201: first flow channel region; 202: second flow channel region; 2000: flow channel; 2001: first battery heat exchange part; 2002: second battery heat exchange part; 2011: first inlet; 2012: first outlet; 2021: second inlet; 2022: second outlet; 21: first battery heat exchanger; 211: first valve; 22: second battery heat exchanger; 221: second valve; 23: heater; 231: first heater; 232: second heater; 233: third heater; 24: power component; 25: third parallel branch; 251: fourth valve; 252: third valve; 253: fifth valve; 254: sixth valve; 255: seventh valve; 261: first three-way valve; 262: second three-way valve; 263: third three-way valve; 3: temperature detection element; 41: first parallel branch; 42: second parallel branch; 51: first parallel loop; 52: second parallel loop.

### DESCRIPTION OF EMBODIMENTS

The specific embodiments of this disclosure is described in detail below with reference to the accompanying drawings. It should be understood that the specific embodiments described herein is for illustrative and explanatory purposes only and is not intended to limit this disclosure.

In this disclosure, unless otherwise stated, directional terms such as "upper" and "lower" generally refer to the direction of the corresponding figure, "upstream" and "downstream" refer to the flow direction of the heat exchange medium, and the terms "first" and "second" are used to distinguish different components and do not have any sequential or important meaning. Furthermore, in the following descriptions, when referring to the accompanying drawings, unless otherwise explained, the same reference numerals in different drawings denote the same or similar elements.

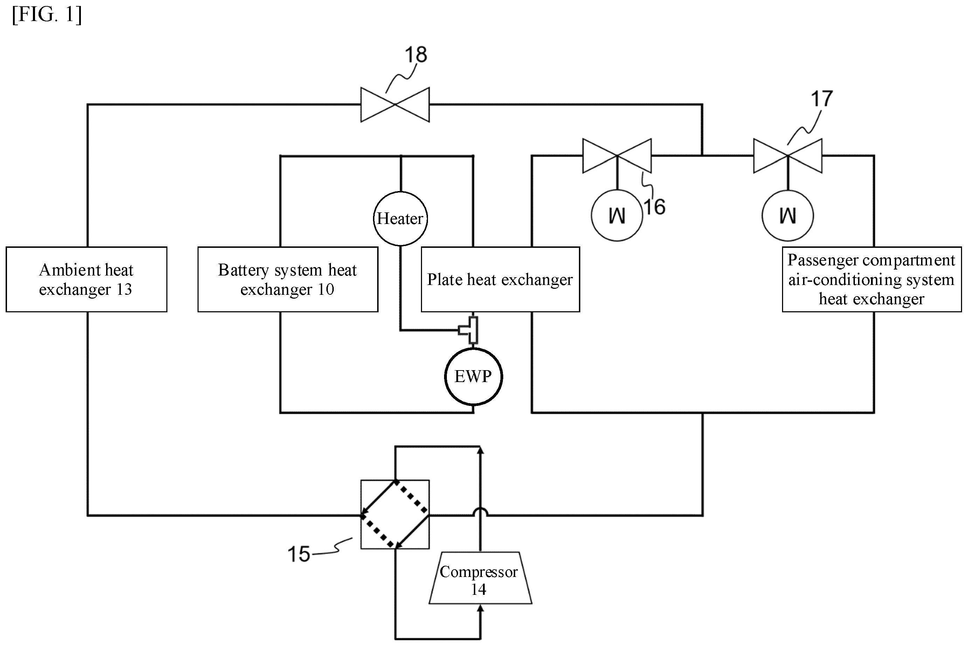

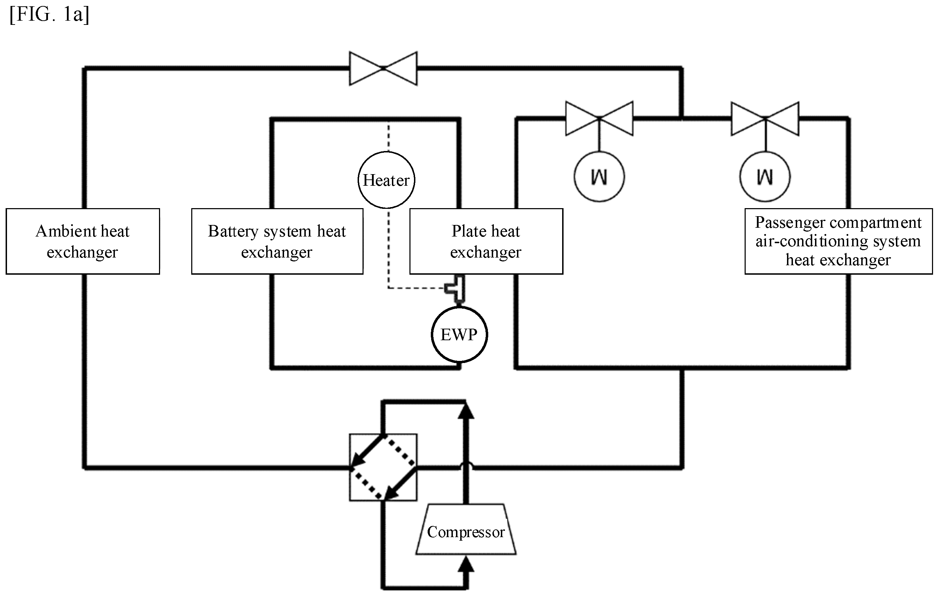

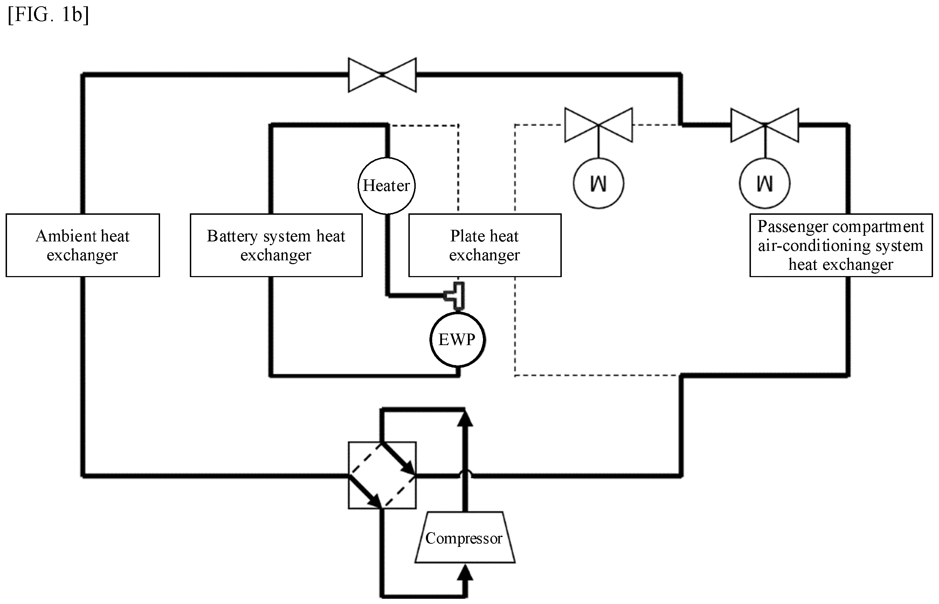

In the related embodiments of this disclosure, in order to heat and cool a battery system, as shown in FIG. 1, a new energy vehicle battery thermal management system includes a compressor 14, a reversing valve 15, a passenger compartment air-conditioning system heat exchanger, a plate heat exchanger, a first electronic expansion valve 16, a second electronic expansion valve 17, an expansion valve 18, an ambient heat exchanger 13, a water pump, a battery system heat exchanger 10, a heater, and a three-way valve.

As shown in FIG. 1a, the reversing valve 15 is adjusted, to adjust a car air conditioning system to a cooling mode. Refrigerant circulation is as follows: gaseous low-pressure refrigerant passes through the compressor 14 and is converted into gaseous high-pressure refrigerant, and passes through the ambient heat exchanger 13 to release heat and is converted into liquid high-pressure refrigerant. After passing through the expansion valve 18 and being converted into liquid low-pressure refrigerant, the liquid high-pressure refrigerant is divided into two parallel flows. The two flows absorb heat and are converted into gaseous low-pressure refrigerant by passing through the passenger compartment air-conditioning system heat exchanger and the plate heat exchanger, respectively. Two refrigerant flow rates are controlled collaboratively by the first electronic expansion valve 16 and the second electronic expansion valve 17. The two gaseous low-pressure refrigerant flows then merge and pass through the reversing valve 15 to return to the compressor 14. In a liquid cooling mode, heat exchange medium circulation is as follows: a heat exchange medium circulates, under drive of the water pump, in a cooling loop including the water pump, the plate heat exchanger, and the battery system heat exchanger 10. The heat exchange medium releases heat and reaches a specific temperature after passing through the plate heat exchanger. At this time, the liquid low-pressure refrigerant flowing in the plate heat exchanger can absorb heat of the battery when passing through the battery system heat exchanger 10, thereby completing cooling of the battery system.

As shown in FIG. 1b, the first electronic expansion valve 16 is turned off, and the air conditioning system and a liquid heat system are independent of each other and do not interfere with each other. In a liquid heating mode, heat exchange medium circulation is as follows: the heat exchange medium circulates, under drive of the water pump, in a heating loop including the water pump, the heater, and the battery system heat exchanger 10. The heat exchange medium absorbs heat and reaches a specific temperature after passing through the heater. The heat exchange medium releases heat when passing through the battery system heat exchanger, thereby completing heating of the battery system.

The air conditioning system, by changing the reversing valve 15, adjusts the air conditioning system to a heating mode. The gaseous low-pressure refrigerant passes through the compressor 14 and is converted into gaseous high-pressure refrigerant. The gaseous low-pressure refrigerant first passes through the passenger compartment air-conditioning system heat exchanger (equivalent to a condenser) to release heat and is converted into liquid high-pressure refrigerant, to complete heating of a passenger compartment. After passing through the second electronic expansion valve 17 and the expansion valve 18 and being converted into liquid low-pressure refrigerant, the liquid high-pressure refrigerant flows through the ambient heat exchanger (equivalent to an evaporator), to absorb heat and be converted into gaseous low-pressure refrigerant, and pass through the reversing valve 15 to return to the compressor 14.

In the foregoing embodiments, it is impossible to heat or cool different parts of the battery based on different environments and operating conditions, and it is impossible to meet thermal load requirements of different battery parts, resulting in a large temperature difference between different parts of the battery. Furthermore, the battery system heat exchanger has a long flow channel and high flow resistance, resulting in a large pressure drop and a large temperature drop at an inlet/outlet of the heat exchange medium, which is not conducive to controlling the temperature difference of the battery and affects overall performance of the battery.

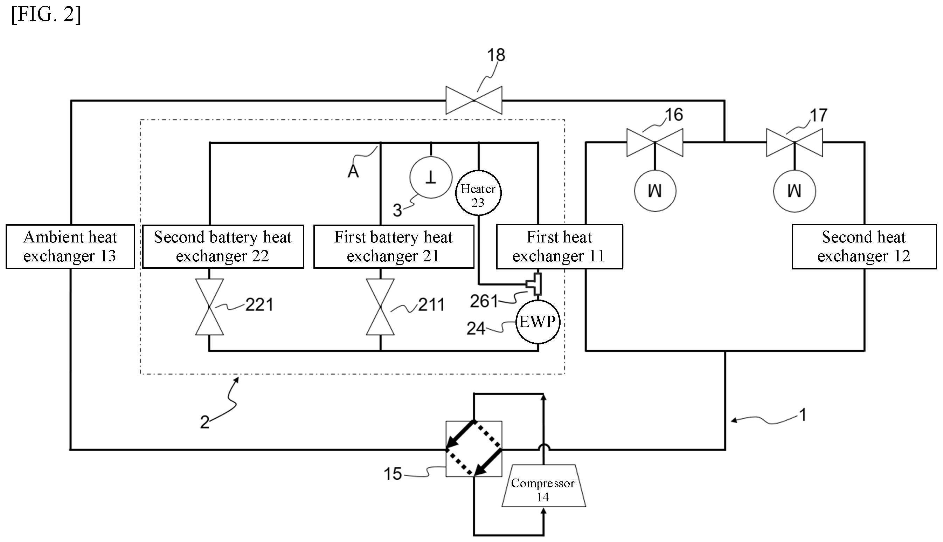

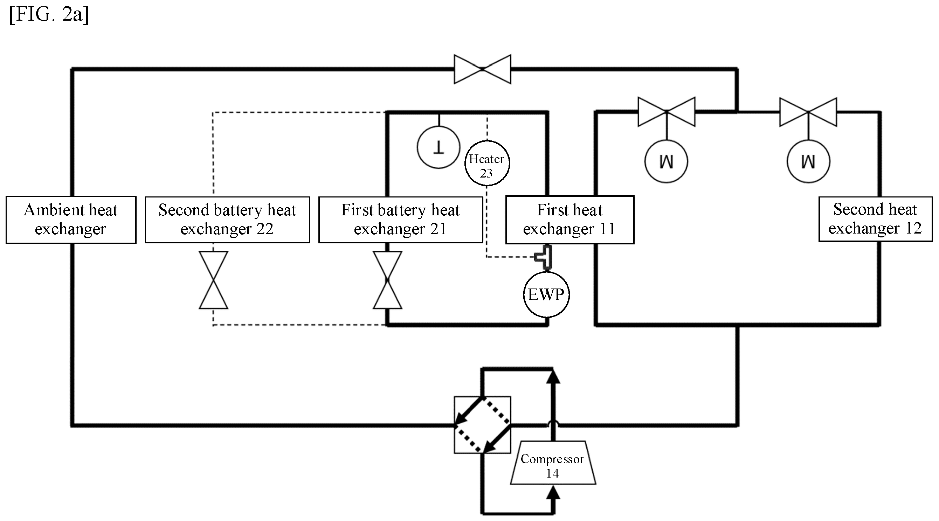

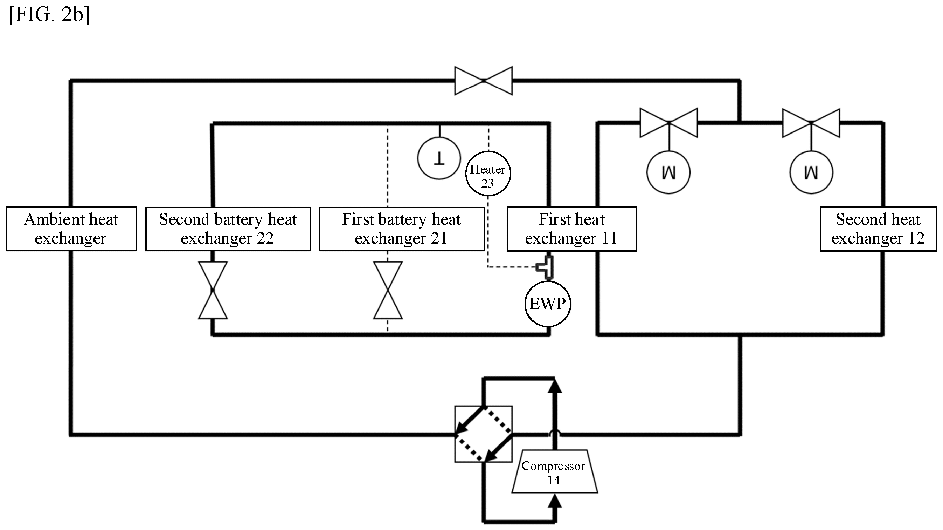

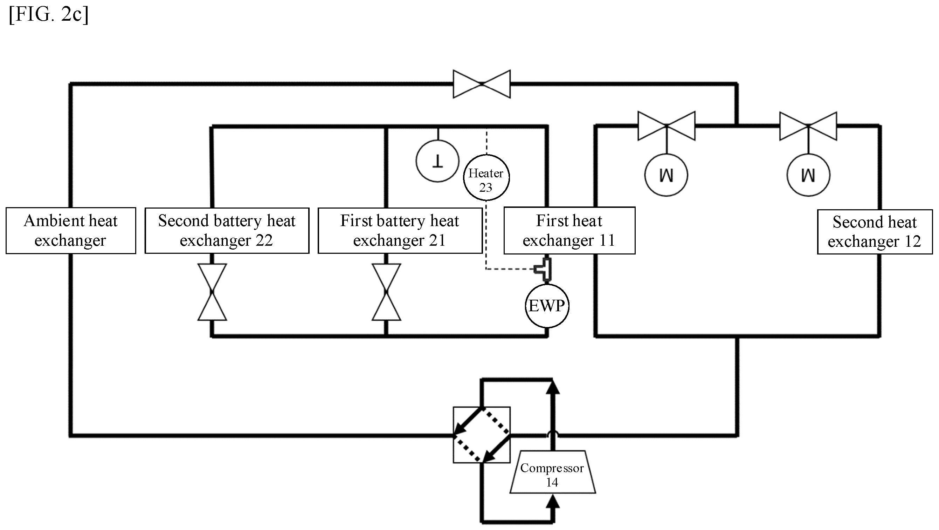

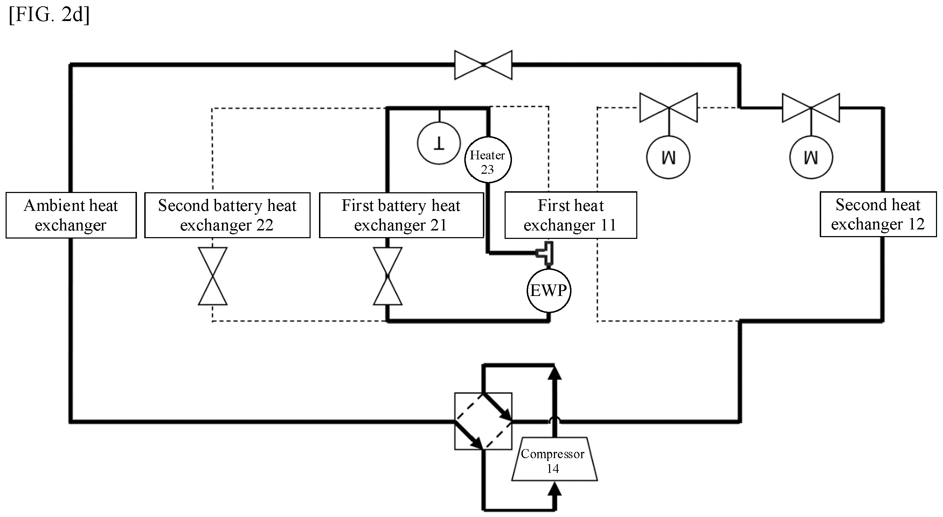

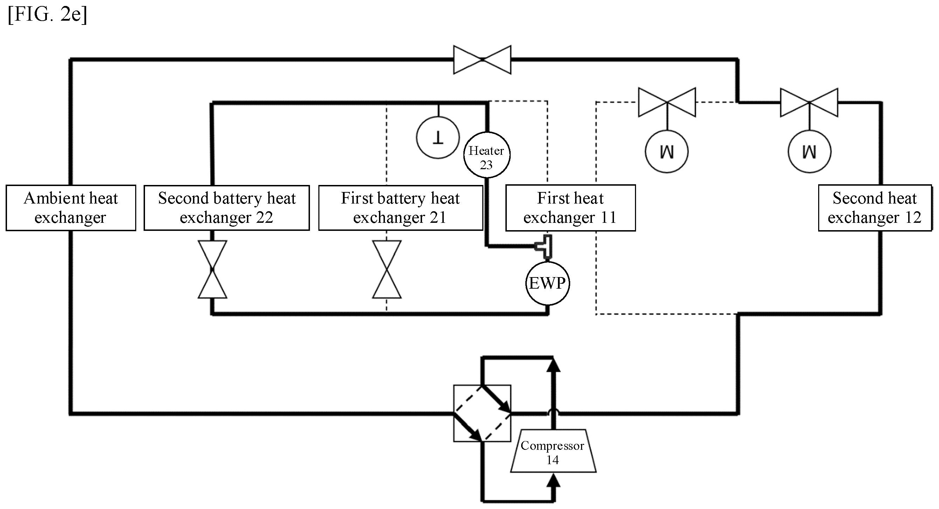

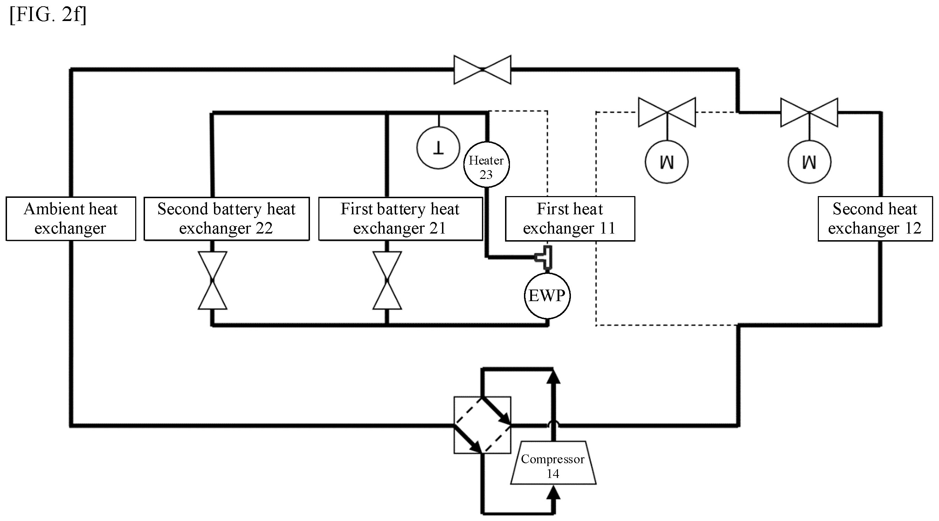

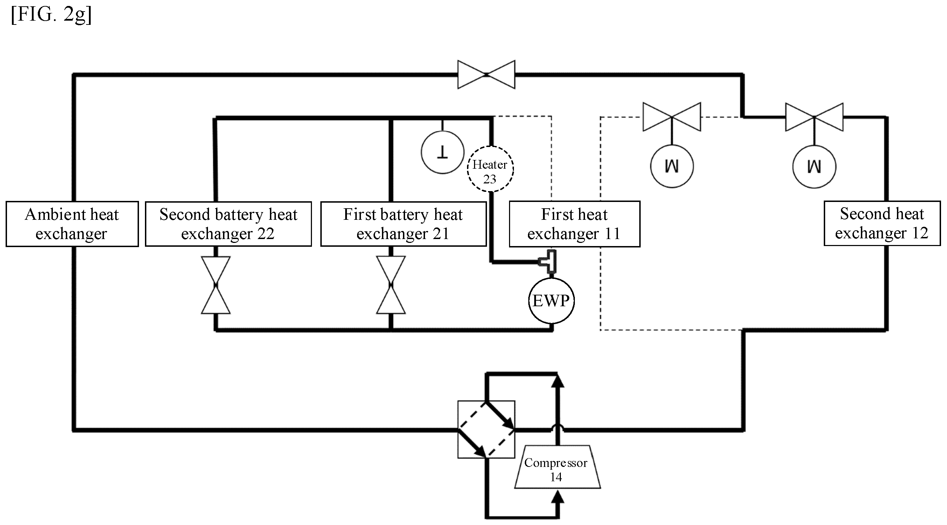

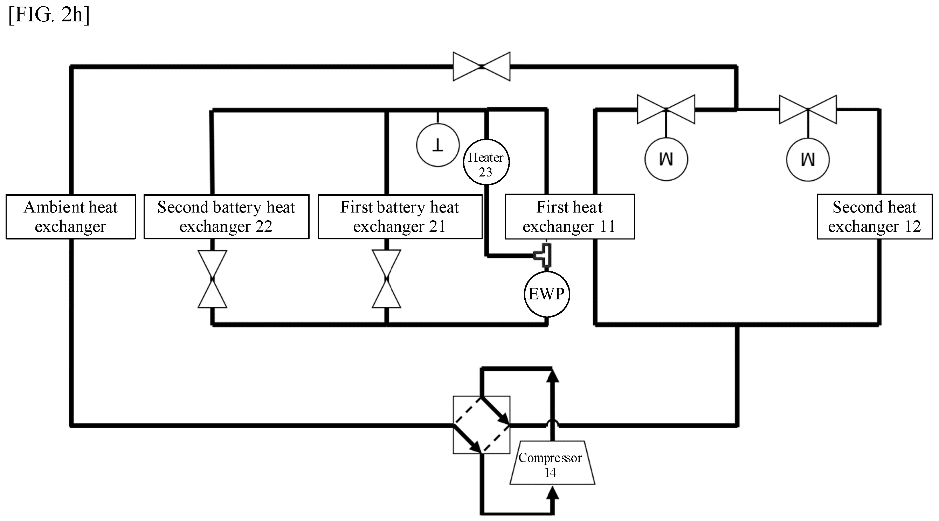

To address the foregoing problems, as shown in FIG. 2 to FIG. 6, this disclosure provides a battery thermal management system. This system includes a heat exchange module 1 and a battery temperature control module 2 (shown in the dashed box). The heat exchange module 1 has a first heat exchanger 11 used as a cold source. The first heat exchanger 11 and a heater 23 used as a heat source are selectively connected to the battery temperature control module 2. When the first heat exchanger 11 is connected to the battery temperature control module 2, the battery is cooled. When the first heat exchanger 11 is not connected to the battery temperature control module 2, but the heater 23 is connected, the battery is heated. The battery temperature control module 2 includes a power component 24 and a plurality of battery heat exchange parts. The power component 24 can be a water pump, and the plurality of battery heat exchange parts are selectively connected to heat exchange medium circulation of the battery temperature control module 2.

In the battery thermal management system disclosed herein, the plurality of battery heat exchange parts correspond to different parts of the battery. The plurality of battery heat exchange parts are independent of each other, and a flow rate and circulation time of a heat exchange medium in each battery heat exchange part can be controlled individually. Flow of heat exchange media in different battery heat exchange parts is controlled, so that a temperature of each part of the battery can be adjusted, thereby achieving temperature equalization. The first heat exchanger 11 used as the cold source and the heater 23 used as the heat source are selectively connected to the battery temperature control module 2. The heat exchange medium cooled by the first heat exchanger 11 (the heat exchange medium currently is at a low temperature) can selectively flow into at least one of the plurality of battery heat exchange parts to absorb heat from the battery and cool the battery. The heat exchange medium heated by the heater 23 (the heat exchange medium currently is at a high temperature) can selectively flow into at least one of the plurality of battery heat exchange parts to release heat and heat the battery. The plurality of battery heat exchange parts can simultaneously, individually, or alternately cool or heat the battery, so that a battery heating and cooling processes can be flexibly adjusted and precisely controlled, reducing a temperature difference between different parts of the battery. Meanwhile, a flow channel of each battery heat exchange part is shortened, flow resistance is reduced, a pressure drop of the heat exchange medium at an inlet/outlet is significantly reduced, a temperature drop is reduced, the battery temperature difference is further reduced, and overall performance of the battery is improved.

There are several manners for disposing the plurality of battery heat exchange parts. The following text uses an example of disposing two battery heat exchange parts for detailed introductions. Certainly, a quantity of battery heat exchange parts can be increased as needed. This disclosure includes an embodiment in which a plurality of flow channels on a battery heat exchanger are divided into two independent flow channel regions, and also includes an embodiment in which two independent battery heat exchangers are disposed.

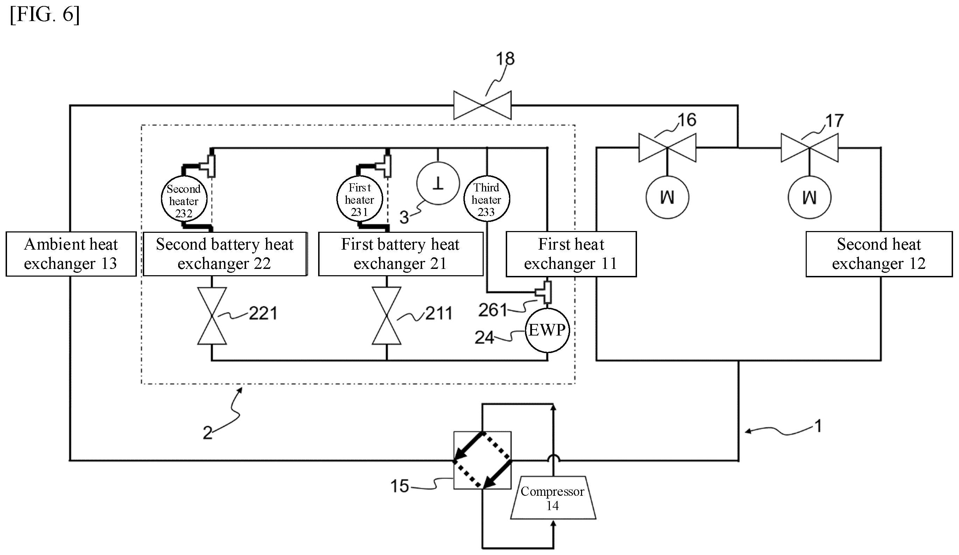

In an example embodiment of this disclosure, as shown in FIG. 6, the battery temperature control module 2 includes a battery heat exchanger. A plurality of flow channels of the battery heat exchanger are divided into a first flow channel region 201 and a second flow channel region 202 that are independent of each other. The first flow channel region 201 forms a first battery heat exchange part, and the second flow channel region 202 forms a second battery heat exchange part. The first flow channel region 201 and the second flow channel region 202 are respectively provided with corresponding heat exchange medium inlets and outlets. The first flow channel region 201 has a first inlet 2011 and a first outlet 2012, and the second flow channel region 202 has a second inlet 2021 and a second outlet 2022. The inlet and outlet are located on a same side of a liquid cooling plate. A plurality of flow channels connected to the inlet and a plurality of flow channels connected to the outlet are interconnected on a side opposite to the inlet and outlet. In this way, a heat exchange medium flowing in from the inlet flows through the flow channels, merges on the side opposite to the inlet and outlet, and flows out from the outlet, to form a ring flow path. Flow rates of the first flow channel region 201 and the second flow channel region 202 can be different and can be controlled independently.

In another example embodiment of this disclosure, the battery temperature control module 2 includes a first battery heat exchanger 21 and a second battery heat exchanger 22, where the first battery heat exchanger 21 forms a first battery heat exchange part and the second battery heat exchanger 22 forms a second battery heat exchange part. The two battery heat exchangers are independent of each other and can be controlled independently. The following uses this embodiment as an example to provide detailed descriptions. Structures of the first battery heat exchanger 21 and the second battery heat exchanger 22 can be the same or different, and can be selected and designed based on needs.

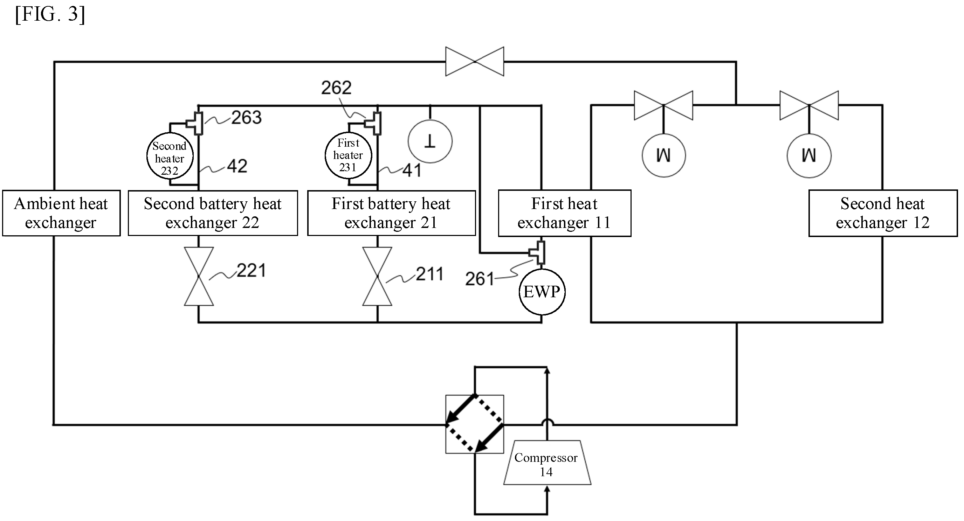

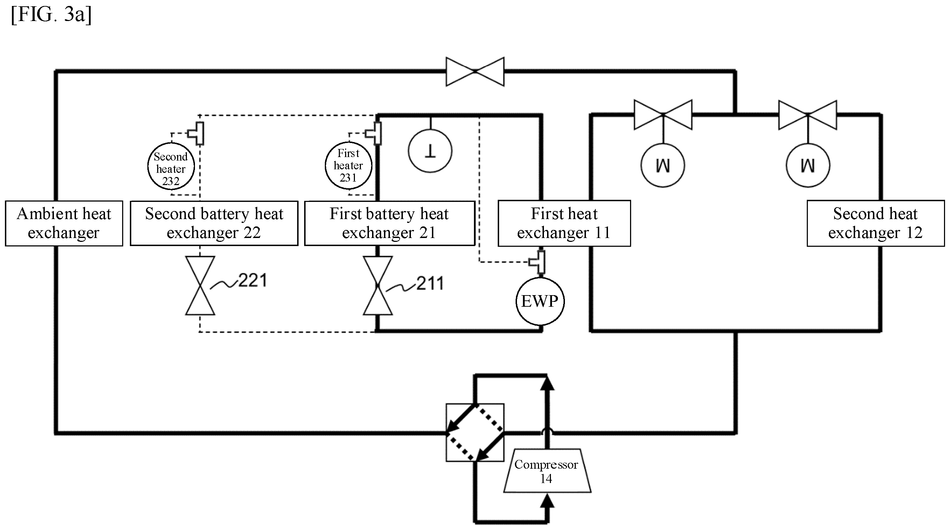

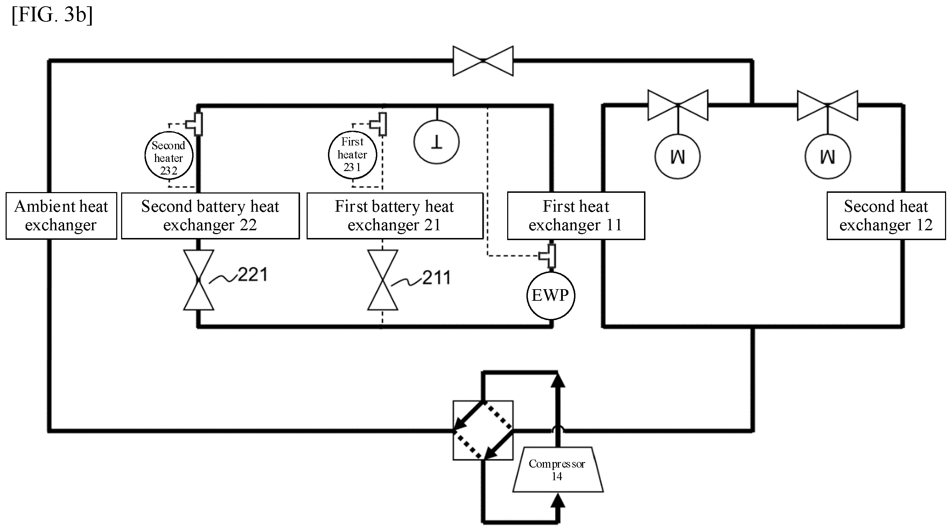

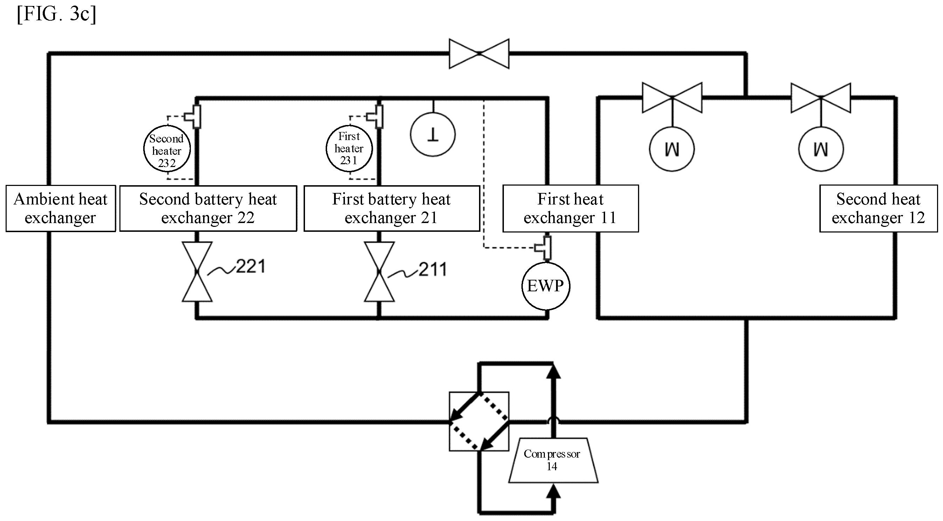

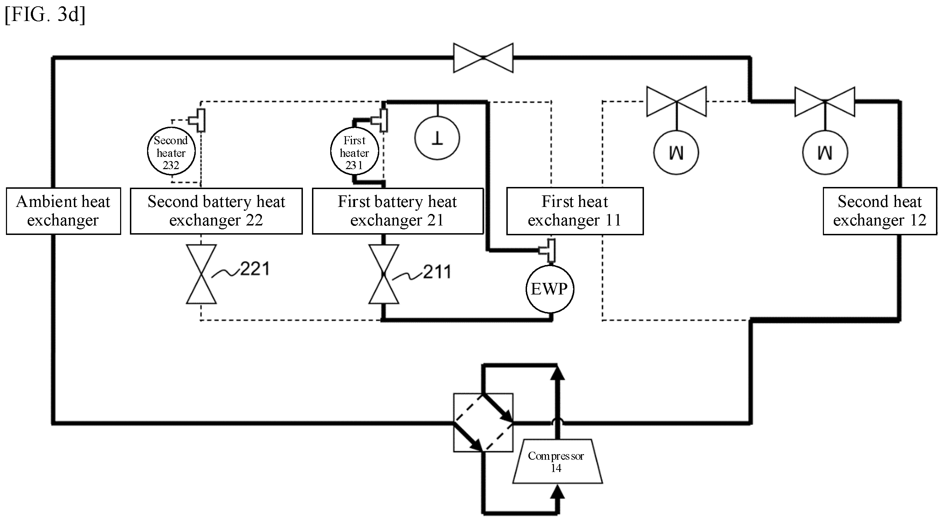

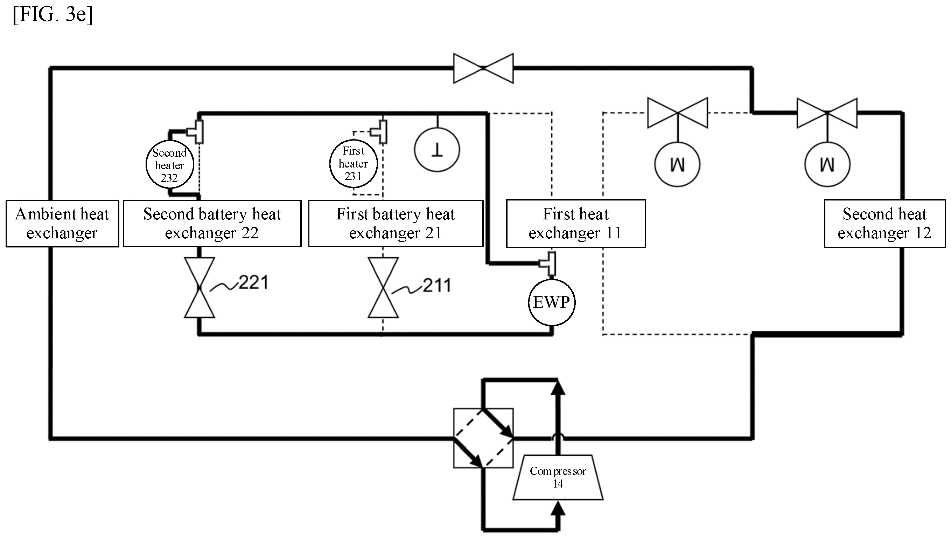

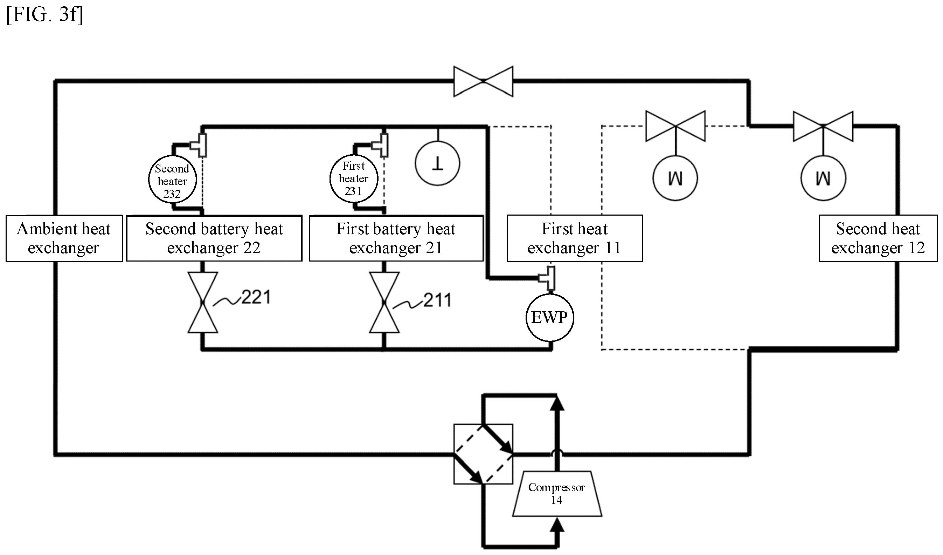

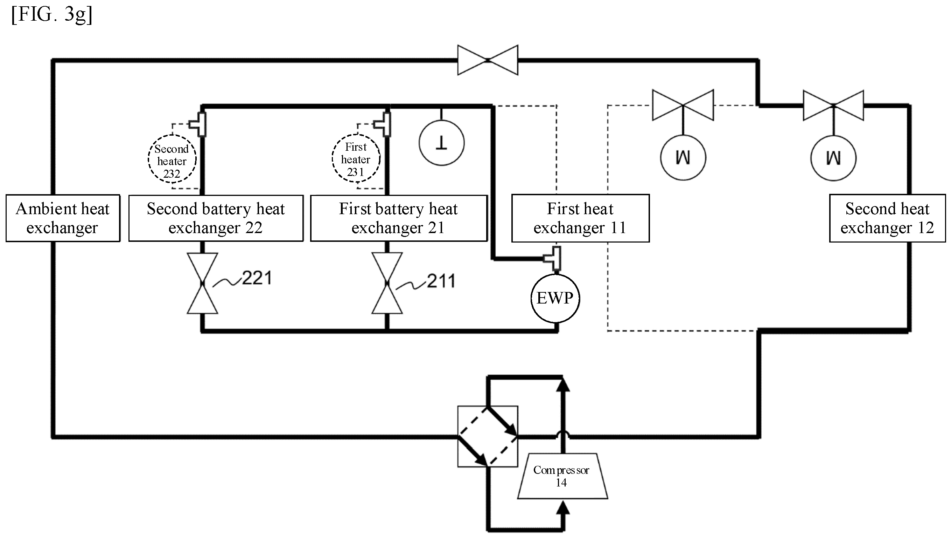

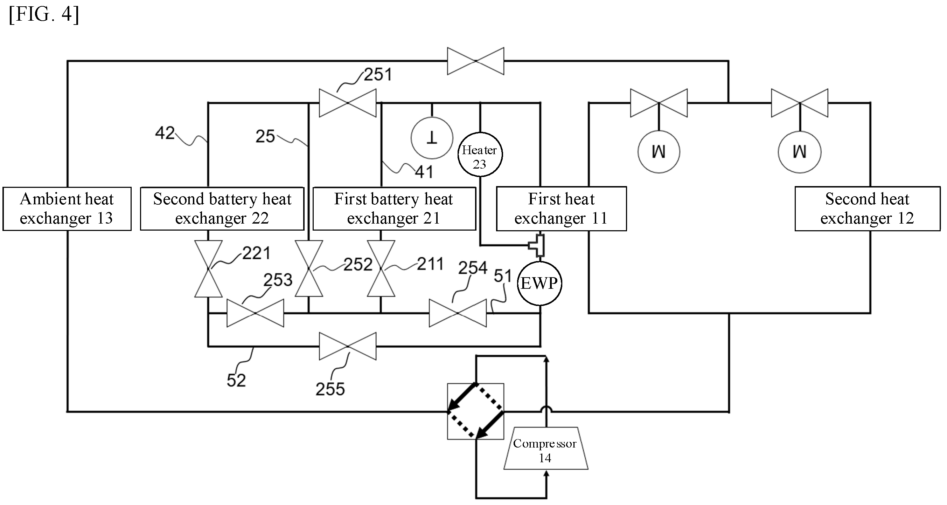

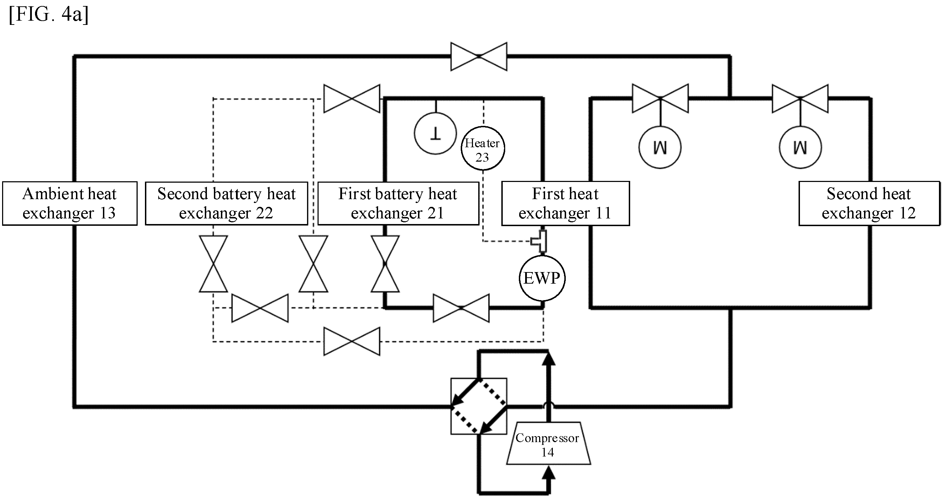

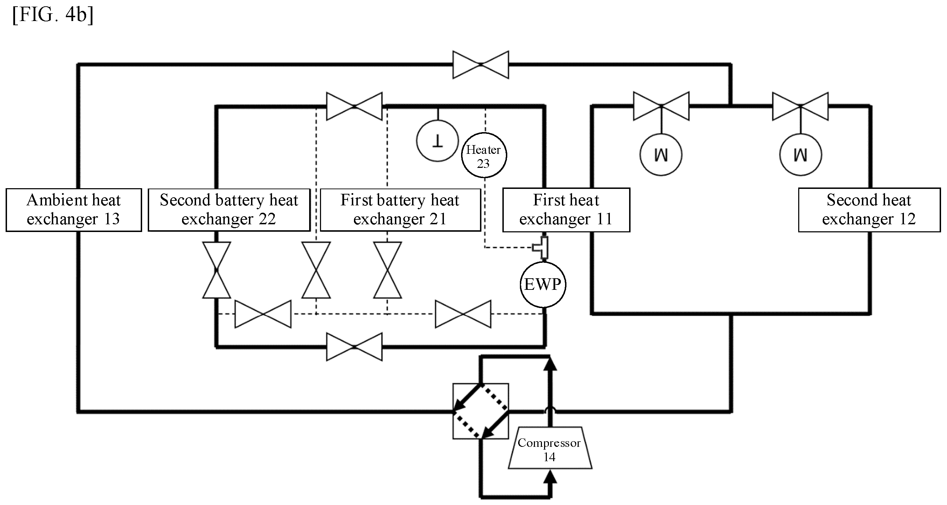

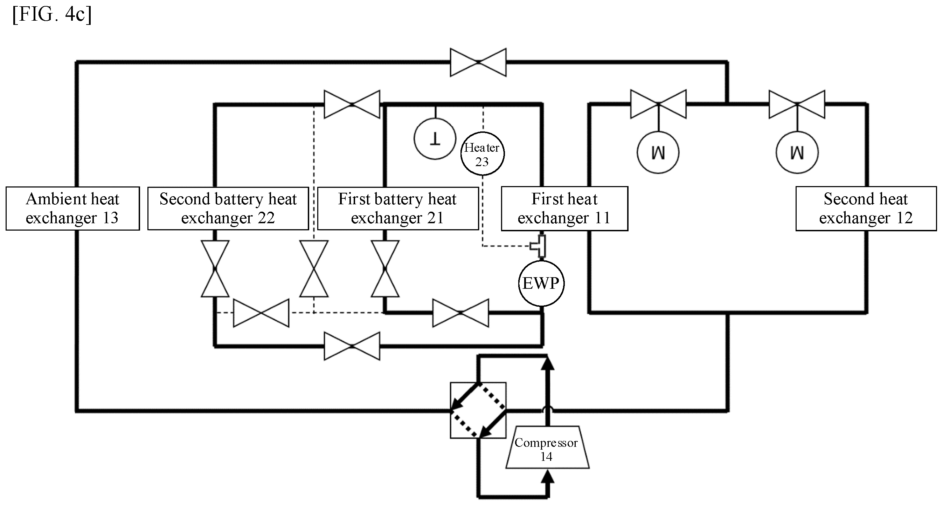

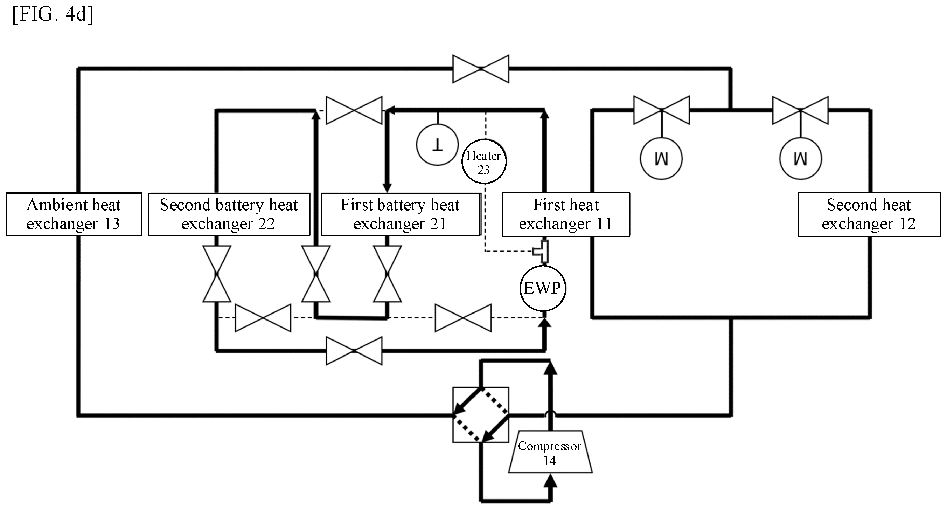

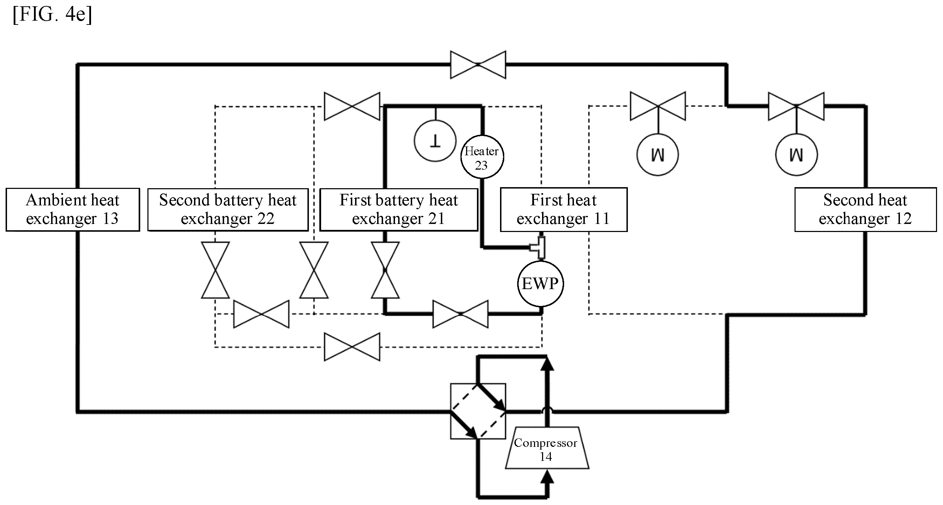

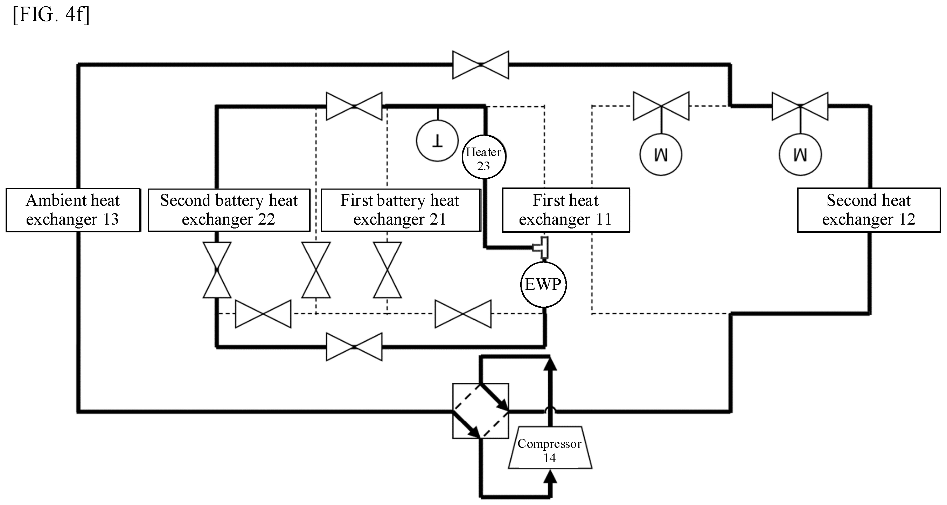

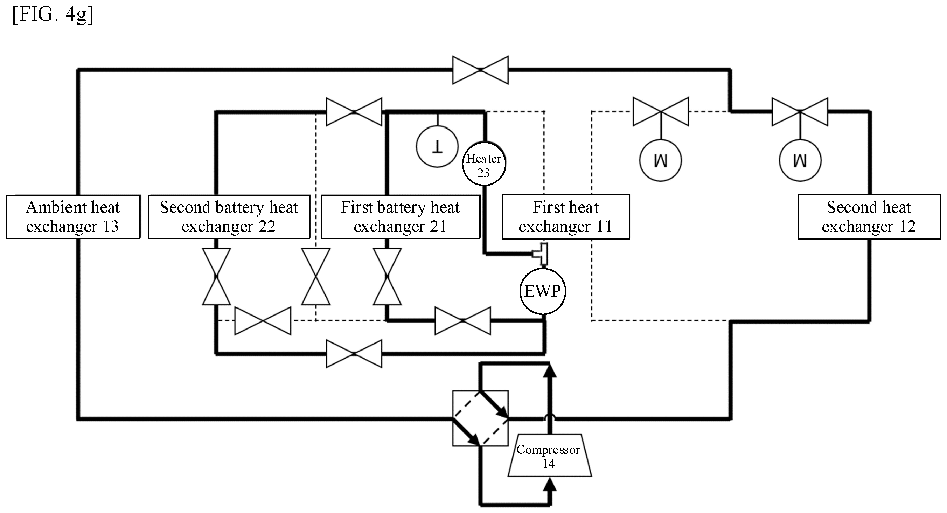

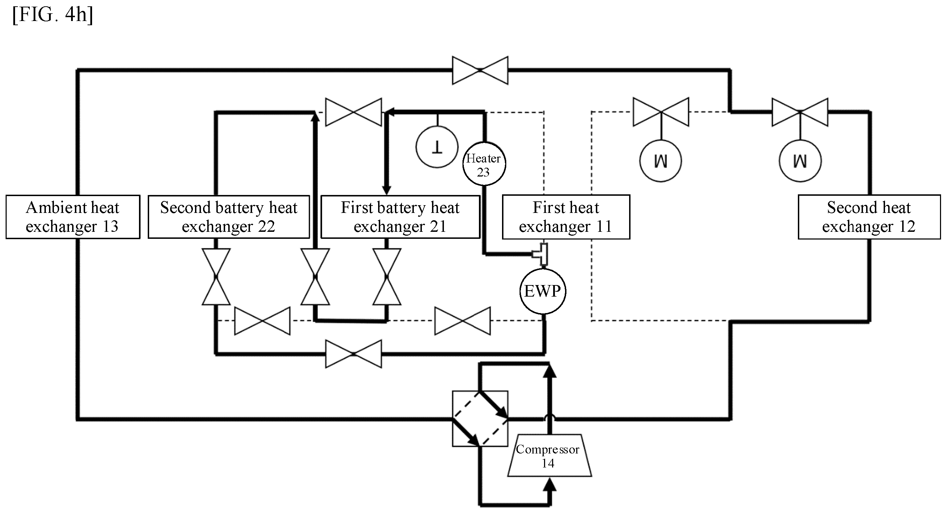

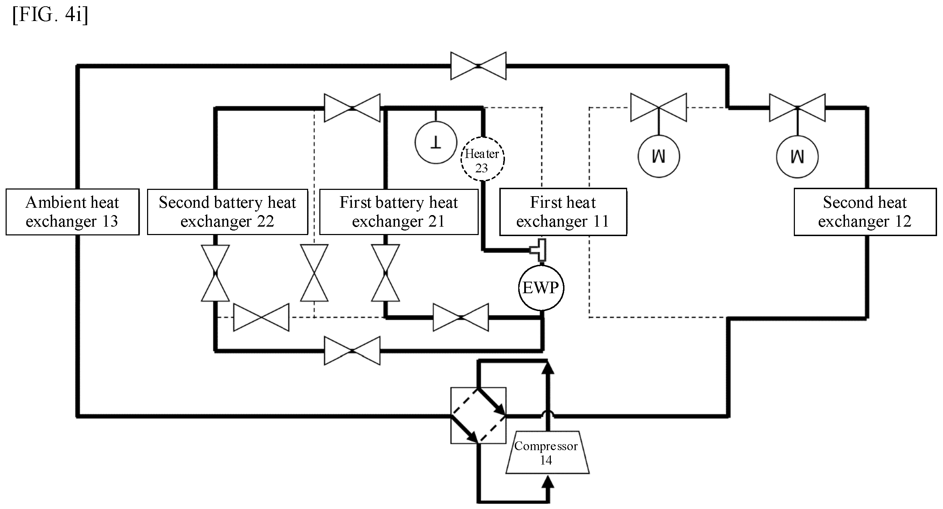

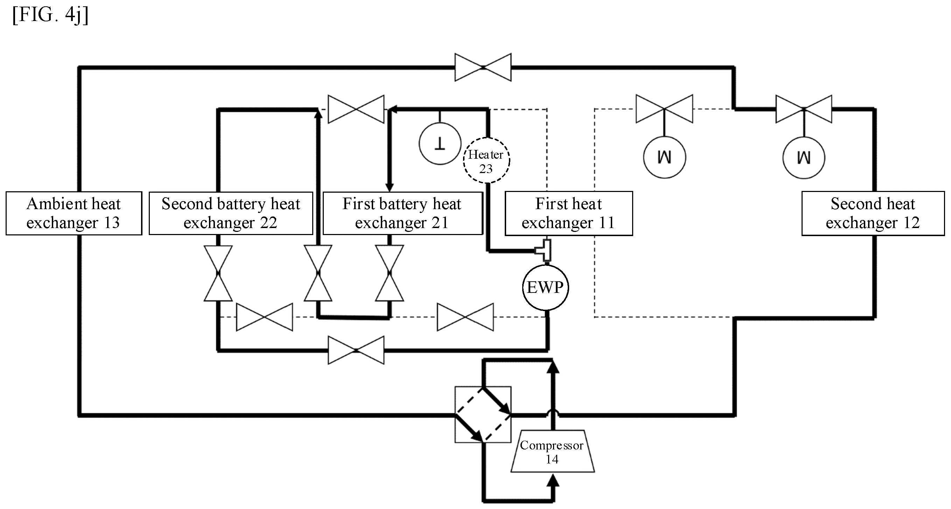

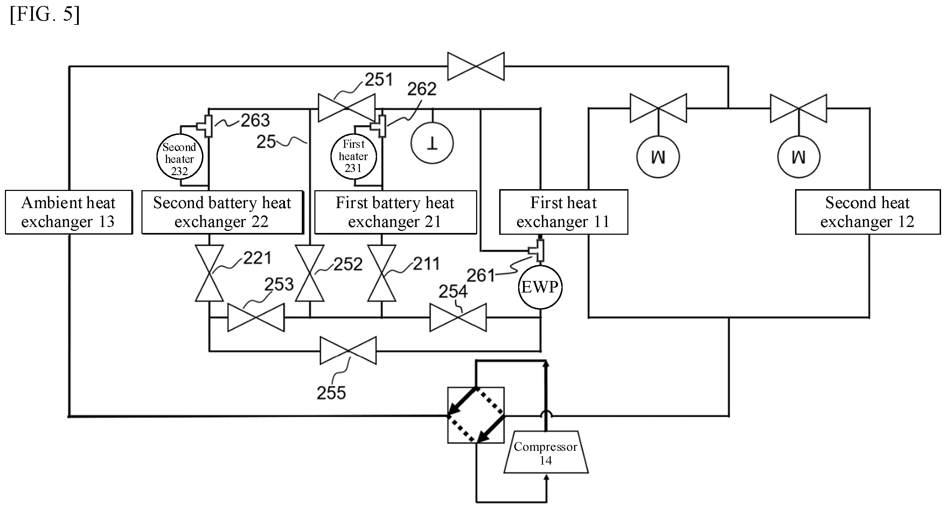

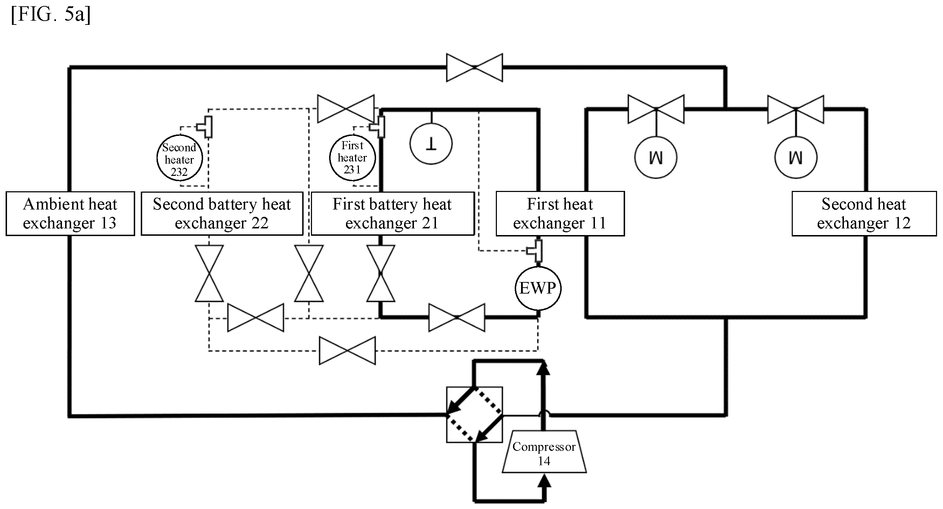

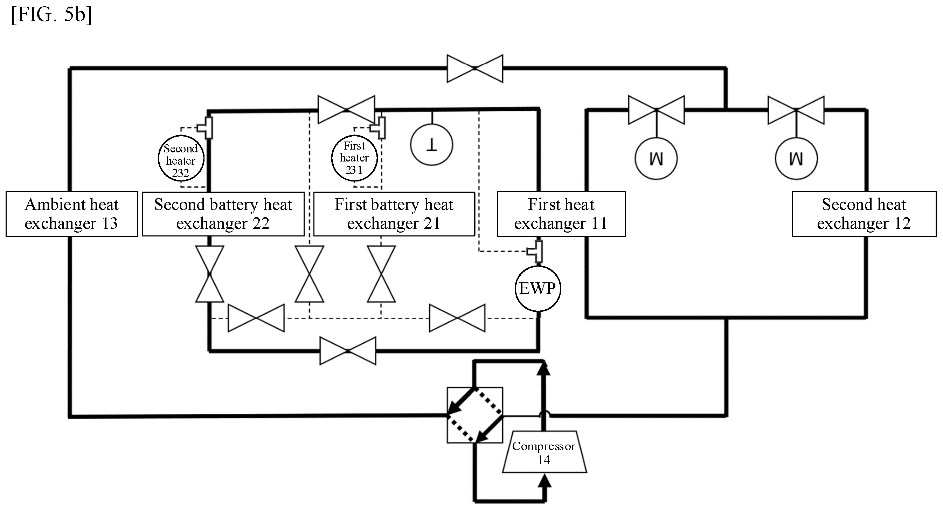

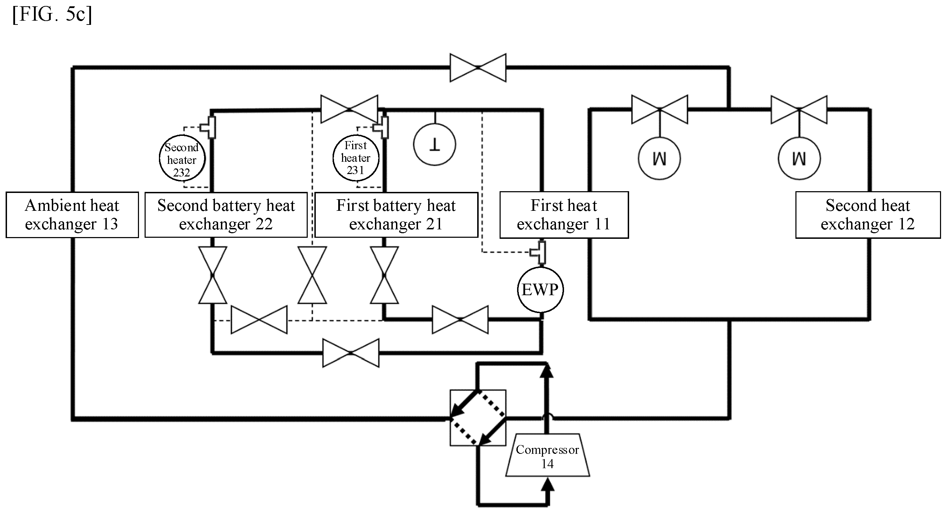

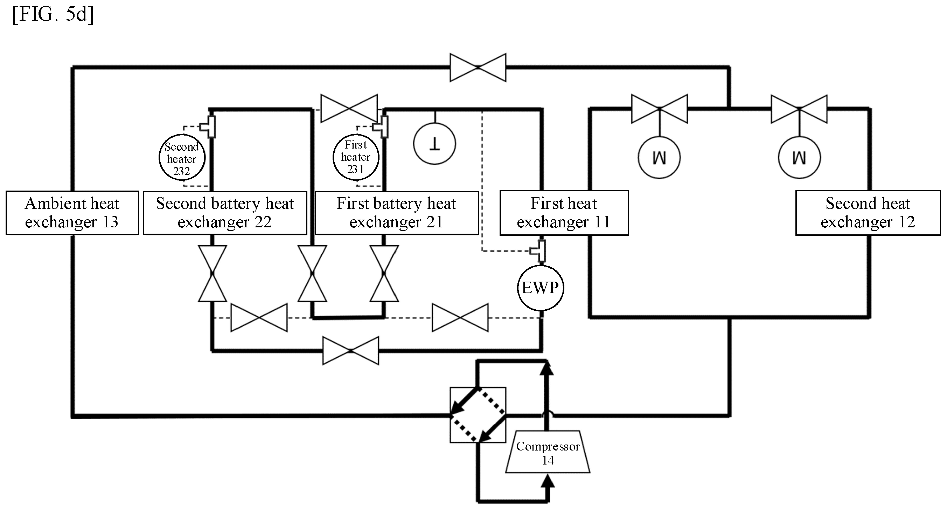

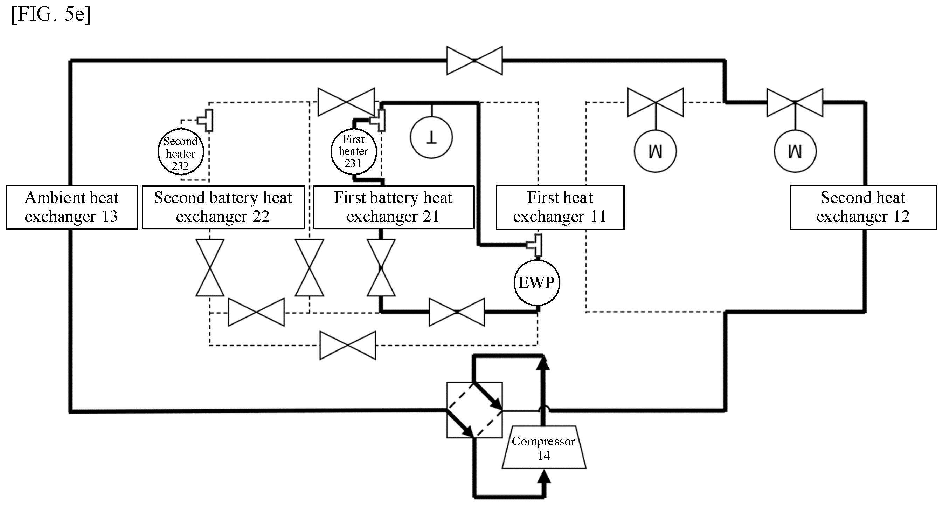

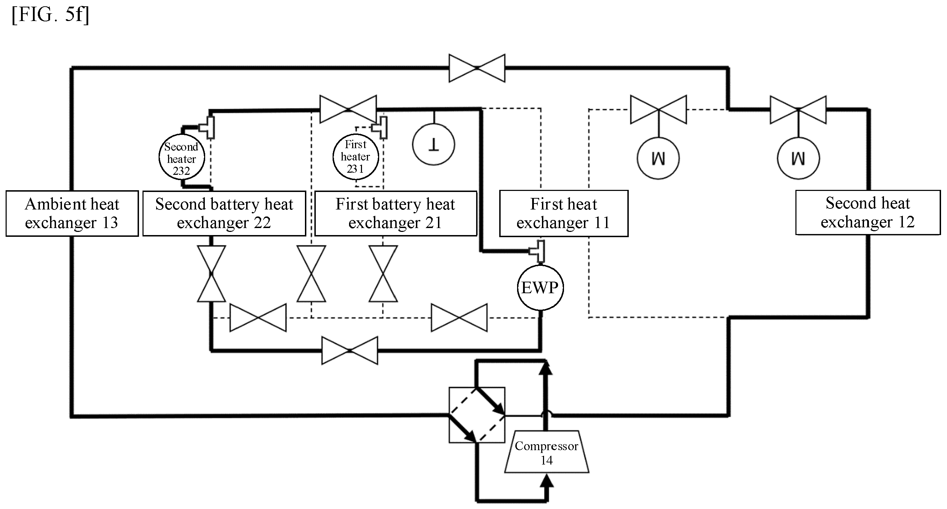

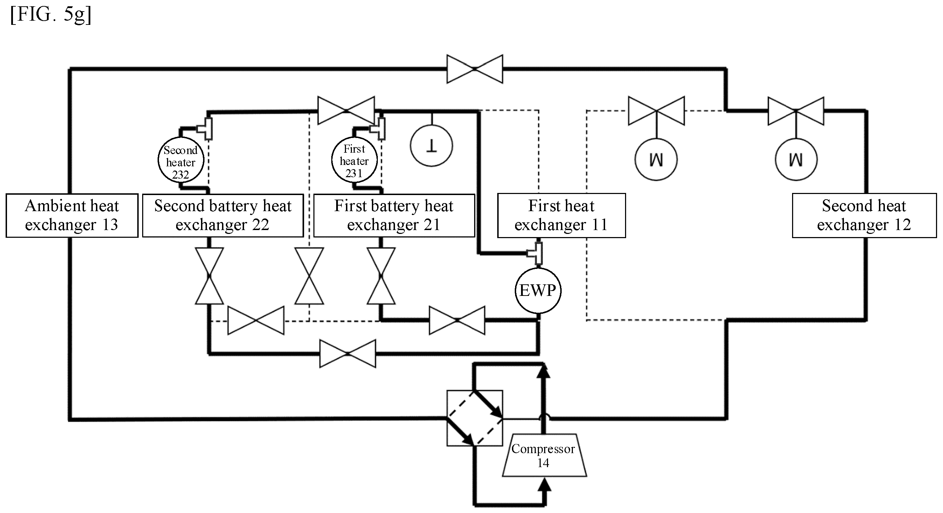

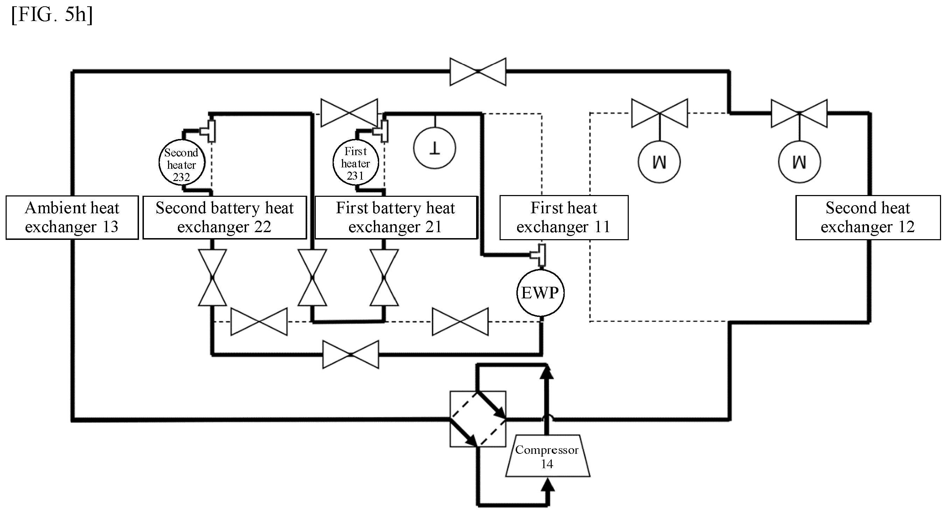

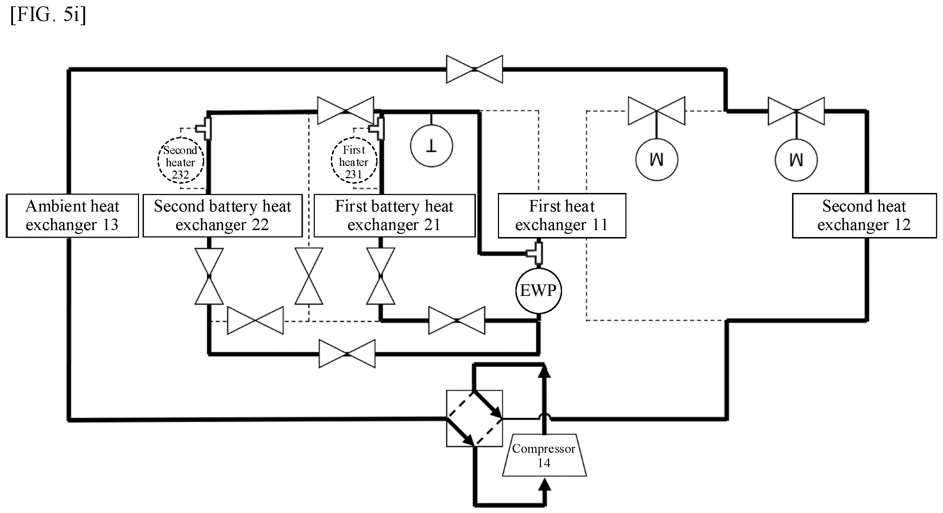

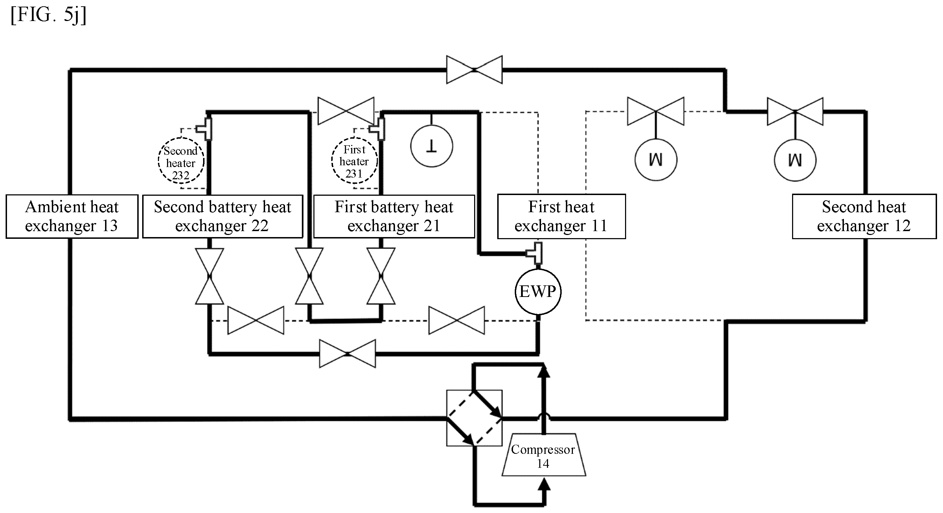

In this disclosure, in embodiments shown in FIG. 2 and FIG. 3, the first battery heat exchanger 21 and the second battery heat exchanger 22 are connected in parallel and can be turned on individually (only one is used), or can be turned on simultaneously (connected in parallel), or can be turned on alternately (the two battery heat exchangers are not turned on at the same time, and time periods in which the two battery heat exchangers are turned on are inconsistent). In embodiments shown in FIG. 4 and FIG. 5, the first battery heat exchanger 21 and the second battery heat exchanger 22 can be selectively connected in parallel or in series by designing the pipes and valves. In comparison with embodiments shown in FIG. 2 and FIG. 3, when both are turned on, the two battery heat exchangers can be connected in parallel or in series. The heat exchange medium first flows into the first battery heat exchanger 21 and then flows through the second battery heat exchanger 22. The appropriate choice can be made based on needs of different environments and working conditions.

In this disclosure, in embodiments shown in FIG. 2 and FIG. 4, there is one heater 23 (located on a main line), and the first battery heat exchanger 21 and the second battery heat exchanger 22 share the heater 23. The heater 23 is selectively connected to the battery temperature control module 2 (the heater 23 is only connected in a liquid heating mode, and the heater 23 is short-circuited in a liquid cooling mode). In embodiments shown in FIG. 3 and FIG. 5, the battery thermal management system includes a first heater 231 and a second heater 232 (disposed on a branch). The first heater 231 and the second heater 232 can be selectively connected to the battery temperature control module 2 to heat heat exchange media flowing into the first battery heat exchanger 21 and the second battery heat exchanger 22 respectively. The dual heaters are used, and the heaters are respectively disposed for the first battery heat exchanger 21 and the second battery heat exchanger 22. A quantity of heaters can be designed based on a quantity of battery heat exchangers.

In Embodiment 5 shown in FIG. 6, the battery thermal management system includes the first heater 231 and the second heater 232 that are disposed on a branch, and the third heater 233 disposed on the main line. The third heater 233 can be connected in parallel or in series (in an embodiment of serial connection, in a liquid cooling mode, the third heater 233 only performs circulation and does not perform heating). The heaters are separately disposed on the main line and the branch, heating power of the heat exchange medium can be adjusted, and any one of the heaters can be used as a backup to ensure heating effect on the heat exchange medium. In Embodiment 5, the heaters on the main line and the branch can be connected simultaneously or individually. An example in which the third heater 233 on the main line and the first heater 231 on the branch are simultaneously connected is used. The valve arrangement and turning-on and turning-off control method are similar to that of individual connection. The arrangement of pipelines and valves in Embodiment 1 or the arrangement of pipelines and valves in Embodiment 3 can be adopted, both of which are within the protection scope of this disclosure.

In this disclosure, a battery assembly may have a first temperature region and a second temperature region. The first battery heat exchange part exchanges heat with the first temperature region, and the second battery heat exchange part exchanges heat with the second temperature region. In this embodiment, heat exchange is implemented in different regions of the battery assembly through the first battery heat exchange part and the second battery heat exchange part, so as to improve temperature uniformity of the battery assembly and improve flexibility and convenience of battery temperature regulation. Certainly, a quantity of battery heat exchange parts can be designed based on a quantity and locations of temperature regions on the battery assembly, and is not limited to two.

The following describes in detail four embodiments with reference to accompanying drawings.

### Embodiment 1 (The first battery heat exchanger 21 and the second battery heat exchanger 22 are connected in parallel and share the heater 23)

As shown in FIG. 2, in this embodiment, the first battery heat exchanger 21 and the second battery heat exchanger 22 are connected in parallel. A first valve 211 is disposed on a parallel branch on which the first battery heat exchanger 21 is located, and a second valve 221 is disposed on a parallel branch on which the second battery heat exchanger 22 is located. The first heat exchanger 11 and the heater 23 are located on a main road located upstream of a branch port A (in terms of a flow direction in which a heat exchange medium, after being cooled by the first heat exchanger 11, flows into a plurality of battery heat exchange parts and then returns to the first heat exchanger 11 through the power component 24) and are connected in parallel through a first three-way valve 261. The first valve 211 is controlled to control whether the first battery heat exchanger 21 is turned on, and the second valve 221 is controlled to control whether the second battery heat exchanger 22 is turned on. The two valves can be controlled independently and are independent of each other. The first valve 211, the second valve 221, and several other valves described below can all be electric valves.

In this embodiment, the heater 23 is connected in parallel with the first heat exchanger 11 through the first three-way valve 261. The first three-way valve 261 is controlled, to switch between a liquid cooling mode and a liquid heating mode. The first three-way valve 261 is controlled, when the first heat exchanger 11 and the power component 24 are connected, a first circulation loop is formed, which is a cooling loop to cool the battery. When the heater 23 and the power component 24 are connected, a second circulation loop is formed to heat the battery.

In Embodiment 1, the liquid cooling mode of the battery thermal management system is one of the following operating modes:
a first liquid cooling mode, where as shown in FIG. 2a, the first three-way valve 261 connects the first heat exchanger 11 and the power component 24, the first valve 211 is turned on, the second valve 221 is turned off, the power component 24 drives the heat exchange medium to flow through the first heat exchanger 11 and the first battery heat exchanger 21, and only a battery part corresponding to the first battery heat exchanger 21 is cooled;
a second liquid cooling mode, where as shown in FIG. 2b, the first three-way valve 261 connects the first heat exchanger 11 and the power component 24, the first valve 211 is turned off, the second valve 221 is turned on, the power component 24 drives the heat exchange medium to flow through the first heat exchanger 11 and the second battery heat exchanger 22, and only a battery part corresponding to the second battery heat exchanger 22 is cooled;
a third liquid cooling mode, where as shown in FIG. 2c, the first three-way valve 261 connects the first heat exchanger 11 and the power component 24, the first valve 211 is turned on, the second valve 221 is turned on, the power component 24 drives the heat exchange medium to flow through the first heat exchanger 11 and then split into two flows, flowing simultaneously through the first battery heat exchanger 21 and the second battery heat exchanger 22, and battery parts corresponding to the first battery heat exchanger 21 and the second battery heat exchanger 22 are simultaneously cooled; and
a fourth liquid cooling mode, where the first three-way valve 261 connects the first heat exchanger 11 and the power component 24, the first valve 211 is turned on within a first preset time period, and the second valve 221 is turned on within a second preset time period; within the first preset time period, the power component 24 drives the heat exchange medium to flow through the first heat exchanger 11 and the first battery heat exchanger 21; and within the second preset time period, the power component 24 drives the heat exchange medium to flow through the first heat exchanger 11 and the second battery heat exchanger 22. In other words, the first liquid cooling mode is executed within the first preset time period, the second liquid cooling mode is executed within the second preset time period, the first liquid cooling mode and the second liquid cooling mode are executed alternately, and the battery part corresponding to the first battery heat exchanger 21 and the battery part corresponding to the second battery heat exchanger 22 are cooled alternately.

The first battery heat exchanger 21 and the second battery heat exchanger 22 can be selected to cool the battery individually, simultaneously, or alternately, as needed.

Accordingly, in this embodiment, the liquid heating mode of the battery thermal management system is one of the following operating modes:
a first liquid heating mode, where as shown in FIG. 2d, the first three-way valve 261 connects the heater 23 and the power component 24, the heater 23 performs heating, the first valve 211 is turned on, the second valve 221 is turned off, the power component 24 drives the heat exchange medium to flow through the heater 23 and the first battery heat exchanger 21, and only the battery part corresponding to the first battery heat exchanger 21 is heated;
a second liquid heating mode, where as shown in FIG. 2e, the first three-way valve 261 connects the heater 23 and the power component 24, the heater 23 performs heating, the first valve 211 is turned off, the second valve 221 is turned on, the power component 24 drives the heat exchange medium to flow through the heater 23 and the second battery heat exchanger 22, and only the battery part corresponding to the second battery heat exchanger 22 is heated;
a third liquid heating mode, where as shown in FIG. 2f, the first three-way valve 261 connects the heater 23 and the power component 24, the heater 23 performs heating, the first valve 211 is turned on, the second valve 221 is turned on, the power component 24 drives the heat exchange medium to flow through the heater 23 and then split into two flows, simultaneously flowing through the first battery heat exchanger 21 and the second battery heat exchanger 22, and the battery parts corresponding to the first battery heat exchanger 21 and the second battery heat exchanger 22 are heated simultaneously; and
a fourth liquid heating mode, where the first three-way valve 261 connects the heater 23 and the power component 24, the heater 23 heats the battery, the first valve 211 is turned on within a first preset time period, and the second valve 221 is turned on within a second preset time period; within the first preset time period, the power component 24 drives the heat exchange medium to flow through the heater 23 and the first battery heat exchanger 21; and within the second preset time period, the power component 24 drives the heat exchange medium to flow through the heater 23 and the second battery heat exchanger 22. In other words, the first liquid heating mode is executed within the first preset time period, the second liquid heating mode is executed within the second preset time period, and the first liquid heating mode and the second liquid heating mode are executed alternately. The battery part corresponding to the first battery heat exchanger 21 and the battery part corresponding to the second battery heat exchanger 22 are heated alternately.

The first battery heat exchanger 21 and the second battery heat exchanger 22 can be selected to heat the battery individually, simultaneously, or alternately, as needed.

In this embodiment, the battery thermal management system further has one of the following operating modes:
a uniform temperature mode, where as shown in FIG. 2g, the first three-way valve 261 connects the heater 23 and the power component 24, the heater 23 is turned off, the first valve 211 is turned on, the second valve 221 is turned on, and the power component 24 drives the heat exchange medium to flow between the first battery heat exchanger 21 and the second battery heat exchanger 22; and in this mode, the first heat exchanger 11 is not connected to the battery temperature control module 2, the heater 23 is connected to the battery temperature control module 2 but does not perform heating, and a uniform temperature is achieved by circulating the heat exchange medium between a plurality of battery heat exchange parts; and
an energy-saving mode, where turning-on and turning-off of the first valve 211 and the second valve 221 are controlled based on temperatures of heat exchange media in the first battery heat exchanger 21 and the second battery heat exchanger 22; and when the temperature of the heat exchange medium is greater than a preset threshold, a corresponding valve is turned on, the first three-way valve 261 connects the heater 23 and the power component 24, the heater 23 is turned off from heating, and the power component 24 drives the heat exchange medium to flow in the first battery heat exchanger 21 or the second battery heat exchanger 22. A fast charging process of a blade battery is used as an example. Temperatures on both sides rises while a temperature in a middle region rises slowly. At this time, a temperature of a heat exchange medium in a battery heat exchange part (for example, the first battery heat exchanger 21) corresponding to the middle region is lower than the preset threshold. The first valve 211 is turned off, and the heat exchange medium in the first battery heat exchanger 21 does not flow. The heat exchange medium only circulates when the temperature of the heat exchange medium reaches the preset threshold. This can reduce power requirements of the power component 24, reduce energy consumption, and save energy.

### Embodiment 2 (The first battery heat exchanger 21 and the second battery heat exchanger 22 are connected in parallel and heaters are respectively disposed)

Based on Embodiment 1, Embodiment 2 provides separate heaters for the two battery heat exchangers, as shown in FIG. 3. The battery thermal management system includes a first heater 231 and a second heater 232. The first heater 231 is connected, through a second three-way valve 262, in parallel with a pipeline on which the first battery heat exchanger 21 is disposed, and the second heater 232 is connected, through a third three-way valve 263, in parallel with a pipeline on which the second battery heat exchanger 22 is disposed. The first heater 231 is located between the first battery heat exchanger 21 and a branch inlet of a parallel branch on which the first battery heat exchanger 21 is located. When the upper and lower ports of the second three-way valve 262 are connected, the first heater 231 is short-circuited, and this is the liquid cooling mode. When the second three-way valve 262 is connected to the upper port and a side port, the first heater 231 is connected, and this is the liquid heating mode. The second heater 232 is located between the second battery heat exchanger 22 and the branch inlet of the parallel branch on which the second battery heat exchanger 22 is located. A connection and short-circuit manner is similar to that of the first heater 231.

In Embodiment 2, the liquid cooling mode of the battery thermal management system is one of the following operating modes:
a first liquid cooling mode, where as shown in FIG. 3a, the first three-way valve 261 connects the first heat exchanger 11 and the power component 24, the second three-way valve 262 is short-circuited to the first heater 231, the third three-way valve 263 is turned off, the first valve 211 is turned on, the second valve 221 is turned off, the power component 24 drives the heat exchange medium to flow through the first heat exchanger 11 and the first battery heat exchanger 21, and only a battery part corresponding to the first battery heat exchanger 21 is cooled;
a second liquid cooling mode, where as shown in FIG. 3b, the first three-way valve 261 connects the first heat exchanger 11 and the power component 24, the second three-way valve 262 is turned off, the third three-way valve 263 is short-circuited to the second heater 232, the first valve 211 is turned off, the second valve 221 is turned on, the power component 24 drives the heat exchange medium to flow through the first heat exchanger 11 and the second battery heat exchanger 22, and only a battery part corresponding to the second battery heat exchanger 22 is cooled;
a third liquid cooling mode, where as shown in FIG. 3c, the first three-way valve 261 connects the first heat exchanger 11 and the power component 24, the second three-way valve 262 is short-circuited to the first heater 231, the third three-way valve 263 is short-circuited to the second heater 232, the first valve 211 is turned on, the second valve 221 is turned on, the power component 24 drives the heat exchange medium to flow through the first heat exchanger 11 and then splits into two flows, simultaneously flowing through the first battery heat exchanger 21 and the second battery heat exchanger 22, and the battery parts corresponding to the first battery heat exchanger 21 and the second battery heat exchanger 22 are simultaneously cooled; and
a fourth liquid cooling mode, where the first three-way valve 261 connects the first heat exchanger 11 and the power component 24, the second three-way valve 262 is short-circuited to the first heater 231, the third three-way valve 263 is turned off, and the first valve 211 is turned on within a first preset time period; the second three-way valve 262 is turned off, the third three-way valve 263 is short-circuited to the second heater 232, and the second valve 221 is turned on within a second preset time period; within the first preset time period, the power component 24 drives the heat exchange medium to flow through the first heat exchanger 11 and the first battery heat exchanger 21; and within the second preset time period, the power component 24 drives the heat exchange medium to flow through the first heat exchanger 11 and the second battery heat exchanger 22. In other words, the first liquid cooling mode is executed within the first preset time period, the second liquid cooling mode is executed within the second preset time period, and the first liquid cooling mode and the second liquid cooling mode are executed alternately, and the battery part corresponding to the first battery heat exchanger 21 and the battery part corresponding to the second battery heat exchanger 22 are cooled alternately.

The first battery heat exchanger 21 and the second battery heat exchanger 22 can be selected to cool the battery individually, simultaneously, or alternately, as needed.

Accordingly, in this embodiment, the liquid heating mode of the battery thermal management system is one of the following operating modes:
a first liquid heating mode, where as shown in FIG. 3d, the first three-way valve 261 is directed to the branch inlet of the dual-cell heat exchanger and is short-circuited to the first heat exchanger 11, the second three-way valve 262 is directed to the first heater 231 and connects the first heater 231 and the power component 24, the third three-way valve 263 is turned off, the first heater 231 performs heating, the first valve 211 is turned on, the second valve 221 is turned off, the power component 24 drives the heat exchange medium to flow through the first heater 231 and the first battery heat exchanger 21, and only the battery part corresponding to the first battery heat exchanger 21 is heated;
a second liquid heating mode, where as shown in FIG. 3e, the first three-way valve 261 is directed to the branch inlet of the dual-cell heat exchanger and is short-circuited to the first heat exchanger 11, the third three-way valve 263 is directed to the second heater 232 and connects the second heater 232 and the power component 24, the second three-way valve 262 is turned off, the second heater 232 performs heating, the first valve 211 is turned off, and the second valve 221 is turned on, the power component 24 drives the heat exchange medium to flow through the second heater 232 and the second battery heat exchanger 22, and only the battery part corresponding to the second battery heat exchanger 22 is heated;
a third liquid heating mode, where as shown in FIG. 3f, the first three-way valve 261 is directed to the branch inlet of the dual-battery heat exchanger and short-circuits the first heat exchanger 11, the second three-way valve 262 is directed to the first heater 231, the third three-way valve 263 is directed to the second heater 232, the first valve 211 is turned on, the second valve 221 is turned on, the power component 24 drives the heat exchange medium to split into two flows, respectively flowing through the first heater 231 and the second heater 232 and simultaneously flowing through the first battery heat exchanger 21 and the second battery heat exchanger 22, and the battery parts corresponding to the first battery heat exchanger 21 and the second battery heat exchanger 22 are heated simultaneously; and
a fourth liquid heating mode, where the first three-way valve 261 is directed to the branch inlet of the dual-battery heat exchanger and is short-circuited to the first heat exchanger 11, the second three-way valve 262 is directed to the first heater 231, the third three-way valve 263 is directed to the second heater 232, the second three-way valve 262 and the first valve 211 are turned on synchronously within a first preset time period, and the third three-way valve 263 and the second valve 221 are turned on synchronously within a second preset time period; within the first preset time period, the power component 24 drives the heat exchange medium to flow through the first heater 231 and the first battery heat exchanger 21; and within the second preset time period, the power component 24 drives the heat exchange medium to flow through the second heater 232 and the second battery heat exchanger 22. In other words, the first liquid heating mode is executed within the first preset time period, the second liquid heating mode is executed within the second preset time period, the first liquid heating mode and the second liquid heating mode are executed alternately, and the battery part corresponding to the first battery heat exchanger 21 and the battery part corresponding to the second battery heat exchanger 22 are heated alternately.

The first battery heat exchanger 21 and the first heater 231, the second battery heat exchanger 22 and the second heater 232 can be selected to heat the battery individually, simultaneously or alternately, as needed.

In this embodiment, the battery thermal management system further has one of the following operating modes:
a uniform temperature mode, where as shown in FIG. 3g, the first three-way valve 261 is short-circuited to the first heat exchanger 11, the second three-way valve 262 is short-circuited to the first heater 231, the third three-way valve 263 is short-circuited to the second heater 232, the first valve 211 is turned on, the second valve 221 is turned on, and the power component 24 drives the heat exchange medium to flow between the first battery heat exchanger 21 and the second battery heat exchanger 22; and in this mode, neither the first heat exchanger 11 nor the heater 23 is connected to the battery temperature control module 2, and a uniform temperature is achieved by circulating the heat exchange medium among a plurality of battery heat exchange parts; and
an energy-saving mode, where turning-on and turning-off of the first valve 211 and the second valve 221 are controlled based on temperatures of heat exchange media in the first battery heat exchanger 21 and the second battery heat exchanger 22; and when the temperature of the heat exchange medium is greater than a preset threshold, a corresponding valve is turned on, the first three-way valve 261 is short-circuited to the first heat exchanger 11, the second three-way valve 262 is short-circuited to the first heater 231, the third three-way valve 263 is short-circuited to the second heater 232, and the power component 24 drives the heat exchange medium to flow in the first battery heat exchanger 21 or the second battery heat exchanger 22. The heat exchange medium only circulates when the temperature of the heat exchange medium reaches the preset threshold. This can reduce power requirements of the power component 24, reduce energy consumption, and save energy.

### Embodiment 3 (The first battery heat exchanger 21 and the second battery heat exchanger 22 share the same heater 23, and are selectively connected in parallel or in series)

In this embodiment, as shown in FIG. 4, the battery temperature control module 2 includes the first battery heat exchanger 21 and the second battery heat exchanger 22 connected in parallel. The first valve 211 is disposed on the first parallel branch on which the first battery heat exchanger 21 is located, and the second valve 221 is disposed on the second parallel branch on which the second battery heat exchanger 22 is located. The first heat exchanger 11 and the heater 23 are located on a main road located upstream of a branch port and are connected in parallel through the first three-way valve 261. The battery thermal management system further includes the third parallel branch 25 connected in parallel between the first battery heat exchanger 21 and the second battery heat exchanger 22. The third valve 252 is disposed on the third parallel branch 25, the fourth valve 251 is disposed on the pipeline connecting the first parallel branch 41 and the third parallel branch 25, the fifth valve 253 is disposed on the pipeline connecting the second parallel branch 42 and the third parallel branch 25, the sixth valve 254 is disposed on the first parallel loop 51 connecting the first valve 211 and the power component 24, and the seventh valve 255 is disposed on the second parallel loop 52 connecting the second valve 221 and the power component 24. The first parallel loop 51 and the second parallel loop 52 are arranged in parallel. A quantity and arrangement of the valves are not limited to those shown in the figure. Valves can be added or removed as needed, and some valves can be used as backup valves in some operating modes.

With the foregoing arrangement of pipes and valves, when the first valve 211 and the sixth valve 254 are turned on and the other valves are turned off, the first battery heat exchanger 21 is turned on; when the fourth valve 251, the second valve 221, and the seventh valve 255 are turned on and the other valves are turned off, the second battery heat exchanger 22 is turned on; when the first valve 211, the sixth valve 254, the fourth valve 251, the second valve 221, and the seventh valve 255 are turned on and the other valves are turned off, the first battery heat exchanger 21 and the second battery heat exchanger 22 are turned on simultaneously and connected in parallel; when the first valve 211, the third valve 252, the second valve 221, and the seventh valve 255 are turned on and the other valves are turned off, the first battery heat exchanger 21 and the second battery heat exchanger 22 are turned on simultaneously and connected in series. This can be selected as needed. Any pipeline connection manner in which the first battery heat exchanger 21 and the second battery heat exchanger 22 are selectively connected in parallel or in series is within the protection scope of this disclosure.

In Embodiment 3, the liquid cooling mode of the battery thermal management system is one of the following operating modes:
a first liquid cooling mode, where as shown in FIG. 4a, the first three-way valve 261 connects the first heat exchanger 11 and the power component 24, the first valve 211 and the sixth valve 254 are turned on, the other valves are turned off, the power component 24 drives the heat exchange medium to flow through the first heat exchanger 11 and the first battery heat exchanger 21, and only the battery part corresponding to the first battery heat exchanger 21 is cooled;
a second liquid cooling mode, where as shown in FIG. 4b, the first three-way valve 261 connects the first heat exchanger 11 and the power component 24, the fourth valve 251, the second valve 221 and the seventh valve 255 are turned on, the other valves are turned off, the power component 24 drives the heat exchange medium to flow through the first heat exchanger 11 and the second battery heat exchanger 22, and only the battery part corresponding to the second battery heat exchanger 22 is cooled;
a third liquid cooling mode, where as shown in FIG. 4c, the first three-way valve 261 connects the first heat exchanger 11 and the power component 24, the first valve 211, the sixth valve 254, the fourth valve 251, the second valve 221, and the seventh valve 255 are turned on, the other valves are turned off, the power component 24 drives the heat exchange medium to flow through the first heat exchanger 11 and then split it into two flows, simultaneously flowing through the first battery heat exchanger 21 and the second battery heat exchanger 22, and the corresponding battery parts of the first battery heat exchanger 21 and the second battery heat exchanger 22 are cooled simultaneously;
a fourth liquid cooling mode, where as shown in FIG. 4d, the first three-way valve 261 connects the first heat exchanger 11 and the power component 24, the first valve 211, the third valve 252, the second valve 221 and the seventh valve 255 are turned on, the other valves are turned off, the power component drives the heat exchange medium to flow through the first heat exchanger 11, the first battery heat exchanger 21, and the second battery heat exchanger 22 in sequence, and the battery parts corresponding to the first battery heat exchanger 21 and the second battery heat exchanger 22 are cooled in sequence; and
a fifth liquid cooling mode, where the first three-way valve 261 connects the first heat exchanger 11 and the power component 24, the first valve 211 and the sixth valve 254 are turned on synchronously within a first preset time period, the fourth valve 251, the second valve 221, and the seventh valve 255 are turned on synchronously within a second preset time period; within the first preset time period, the power component 24 drives the heat exchange medium to flow through the first heat exchanger 11 and the first battery heat exchanger 21; and within the second preset time period, the power component 24 drives the heat exchange medium to flow through the first heat exchanger 11 and the second battery heat exchanger 22. In other words, the first liquid cooling mode is executed within the first preset time period, the second liquid cooling mode is executed within the second preset time period, and the first liquid cooling mode and the second liquid cooling mode are executed alternately. The battery part corresponding to the first battery heat exchanger 21 and the battery part corresponding to the second battery heat exchanger 22 are cooled alternately.

The first battery heat exchanger 21 and the second battery heat exchanger 22 can be selected to cool the battery individually, simultaneously, or alternately, as needed.

Accordingly, in this embodiment, the liquid heating mode of the battery thermal management system is one of the following operating modes:
a first liquid heating mode, where as shown in FIG. 4e, the first three-way valve 261 connects the heater 23 and the power component 24, the heater 23 performs heating, the first valve 211 and the sixth valve 254 are turned on, the other valves are turned off, the power component 24 drives the heat exchange medium to flow through the heater 23 and the first battery heat exchanger 21, and only the battery part corresponding to the first battery heat exchanger 21 is heated;
a second liquid heating mode, where as shown in FIG. 4f, the first three-way valve 261 connects the heater 23 and the power component 24, the heater 23 performs heating, the fourth valve 251, the second valve 221, and the seventh valve 255 are turned on, the other valves are turned off, the power component 24 drives the heat exchange medium to flow through the heater 23 and the second battery heat exchanger 22, and only the battery part corresponding to the second battery heat exchanger 22 is heated;
a third liquid heating mode, where as shown in FIG. 4g, the first three-way valve 261 connects the heater 23 and the power component 24, the heater 23 performs heating, the first valve 211, the sixth valve 254, the fourth valve 251, the second valve 221, and the seventh valve 255 are turned on, the other valves are turned off, the power component 24 drives the heat exchange medium to flow through the heater 23 and then split into two flows, simultaneously flowing through the first battery heat exchanger 21 and the second battery heat exchanger 22, and the battery parts corresponding to the first battery heat exchanger 21 and the second battery heat exchanger 22 are heated simultaneously;
a fourth liquid heating mode, where as shown in FIG. 4h, the first three-way valve 261 connects the heater 23 and the power component 24, the heater 23 performs heating, the first valve 211, the third valve 252, the second valve 221, and the seventh valve 255 are turned on, the other valves are turned off, the power component drives the heat exchange medium to flow through the heater 23, the first battery heat exchanger 21, and the second battery heat exchanger 22 in sequence, and the battery parts corresponding to the first battery heat exchanger 21 and the second battery heat exchanger 22 are heated in sequence; and
a fifth liquid heating mode, where the first three-way valve 261 connects the heater 23 and the power component 24, the first valve 211 and the sixth valve 254 are turned on synchronously within a first preset time period, and the fourth valve 251, the second valve 221, and the seventh valve 255 are turned on synchronously within a second preset time period; within the first preset time period, the power component 24 drives the heat exchange medium to flow through the heater 23 and the first battery heat exchanger 21; and within the second preset time period, the power component 24 drives the heat exchange medium to flow through the heater 23 and the second battery heat exchanger 22. In other words, the first liquid heating mode is executed within the first preset time period, the second liquid heating mode is executed within the second preset time period, the first liquid heating mode and the second liquid heating mode are executed alternately, and the battery part corresponding to the first battery heat exchanger 21 and the battery part corresponding to the second battery heat exchanger 22 are heated alternately.

The first battery heat exchanger 21 and the second battery heat exchanger 22 can be selected to heat the battery individually, simultaneously, or alternately, as needed.

In this embodiment, the battery thermal management system further has at least one of the following operating modes:
a first uniform temperature mode, where as shown in FIG. 4i, the first three-way valve 261 connects the heater 23 and the power component 24, the heater 23 is turned off, the first valve 211, the sixth valve 254, the second valve 221, the seventh valve 255, and the fourth valve 251 are turned on, remaining valves are turned off, and the power component 24 drives the heat exchange medium to flow through the first battery heat exchanger 21 and the second battery heat exchanger 22 simultaneously;
a second temperature equalization mode, where as shown in FIG. 4j, the first three-way valve 261 connects the heater 23 and the power component 24, the heater 23 is turned off, the first valve 211, the third valve 252, the second valve 221, and the seventh valve 255 are turned on, remaining valves are turned off, and the power component 24 drives the heat exchange medium to flow through the first battery heat exchanger 21 and the second battery heat exchanger 22 in sequence; and
an energy-saving mode, where based on temperatures of heat exchange media in the first battery heat exchanger 21 and the second battery heat exchanger 22, turning-on and turning-off of the first valve 211 and the sixth valve 254, or turning-on and turning-off of the second valve 221, the fourth valve 251, and the seventh valve 255, are controlled; and when the temperature of the heat exchange medium is greater than a preset threshold, a corresponding valve is turned on, the first three-way valve 261 connects the heater 23 and the power component 24, the heater 23 is turned off from heating, and the power component 24 drives the heat exchange medium to flow in the first battery heat exchanger 21 or the second battery heat exchanger 22. The beneficial effect of the uniform temperature mode and the energy-saving mode in this embodiment is similar to that in Embodiment 1 and Embodiment 2, and is not repeated herein.

### Embodiment 4 (The first battery heat exchanger 21 and the second battery heat exchanger 22 are disposed with heaters respectively, and are selectively connected in parallel or in series)

In this embodiment, as shown in FIG. 5, arrangement of the two heaters is similar to that in Embodiment 2, and arrangement of the two battery heat exchangers, which are selectively connected in parallel or in series, is similar to that in Embodiment 3, and are not repeated herein. In this battery thermal management system, the battery temperature control module 2 includes the first battery heat exchanger 21 and the second battery heat exchanger 22 connected in parallel. The first valve 211 is disposed on the first parallel branch on which the first battery heat exchanger 21 is located, and the second valve 221 is disposed on the second parallel branch on which the second battery heat exchanger 22 is located. The first heat exchanger 11 is located on the main road located upstream of the branch port and is selectively connected through the first three-way valve 261. The battery thermal management system includes the first heater 231 and the second heater 232. The first heater 231 is disposed on the first parallel branch through the second three-way valve 262, and the second heater 232 is disposed on the second parallel branch through the third three-way valve 263. The battery thermal management system further includes the third parallel branch 25 connected in parallel between the first battery heat exchanger 21 and the second battery heat exchanger 22. The third valve 252 is disposed on the third parallel branch 25. The fourth valve 251 is disposed on the pipeline connecting the first parallel branch and the third parallel branch 25. The fifth valve 253 is disposed on the pipeline connecting the second parallel branch and the third parallel branch 25. The sixth valve 254 is disposed on the first loop connecting the first valve 211 and the power component 24. The seventh valve 255 is disposed on the second loop connecting the second valve 221 and the power component 24. The first loop and the second loop are arranged in parallel.

In Embodiment 4, the liquid cooling mode of the battery thermal management system is one of the following operating modes:
a first liquid cooling mode, where as shown in FIG. 5a, the first three-way valve 261 connects the first heat exchanger 11 and the power component 24, the second three-way valve 262 is short-circuited to the first heater 231, the third three-way valve 263 is turned off, the first valve 211 and the sixth valve 254 are turned on, the other valves are turned off, the power component 24 drives the heat exchange medium to flow through the first heat exchanger 11 and the first battery heat exchanger 21, and only the battery part corresponding to the first battery heat exchanger 21 is cooled;
a second liquid cooling mode, where as shown in FIG. 5b, the first three-way valve 261 connects the first heat exchanger 11 and the power component 24, the second three-way valve 262 is turned off, the third three-way valve 263 is short-circuited to the second heater 232, the second valve 221 and the seventh valve 255 are turned on, the other valves are turned off, the power component 24 drives the heat exchange medium to flow through the first heat exchanger 11 and the second battery heat exchanger 22, and only the battery part corresponding to the second battery heat exchanger 22 is cooled;
a third liquid cooling mode, as shown in FIG. 5c, the first three-way valve 261 connects the first heat exchanger 11 and the power component 24, the second three-way valve 262 is short-circuited to the first heater 231, the third three-way valve 263 is short-circuited to the second heater 232, the first valve 211, the sixth valve 254, the fourth valve 251, the second valve 221, and the seventh valve 255 are turned on, the other valves are turned off, the power component 24 drives the heat exchange medium to flow through the first heat exchanger 11 and then split into two paths, simultaneously flowing through the first battery heat exchanger 21 and the second battery heat exchanger 22, and the battery parts corresponding to the first battery heat exchanger 21 and the second battery heat exchanger 22 are cooled simultaneously;
a fourth liquid cooling mode, where as shown in FIG. 5d, the first three-way valve 261 connects the first heat exchanger 11 and the power component 24, the second three-way valve 262 is short-circuited to the first heater 231, the third three-way valve 263 is short-circuited to the second heater 232, the first valve 211, the third valve 252, the second valve 221, and the seventh valve 255 are turned on, the other valves are turned off, the power component drives the heat exchange medium to flow through the first heat exchanger 11, the first battery heat exchanger 21, and the second battery heat exchanger 22 in sequence, and the battery parts corresponding to the first battery heat exchanger 21 and the second battery heat exchanger 22 are cooled in sequence; and
a fifth liquid cooling mode, where the first three-way valve 261 connects the first heat exchanger 11 and the power component 24, the second three-way valve 262 is short-circuited to the first heater 231, the first valve 211 and the sixth valve 254 are turned on within a first preset time period, and the third three-way valve 263 is short-circuited to the second heater 232, the second valve 221, and the seventh valve 255 are turned on within a second preset time period; within the first preset time period, the power component 24 drives the heat exchange medium to flow through the first heat exchanger 11 and the first battery heat exchanger 21; and within the second preset time period, the power component 24 drives the heat exchange medium to flow through the first heat exchanger 11 and the second battery heat exchanger 22. The first liquid cooling mode is executed within the first preset time period, the second liquid cooling mode is executed within the second preset time period, the first liquid cooling mode and the second liquid cooling mode are executed alternately, and the battery part corresponding to the first battery heat exchanger 21 and the battery part corresponding to the second battery heat exchanger 22 are cooled alternately.

The first battery heat exchanger 21 and the second battery heat exchanger 22 can be selected to cool the battery individually, simultaneously, or alternately, as needed.

Accordingly, in this embodiment, the liquid heating mode of the battery thermal management system is one of the following operating modes:
a first liquid heating mode, where as shown in FIG. 5e, the first three-way valve 261 is directed to a branch inlet of a dual-cell heat exchanger and is short-circuited to the first heat exchanger 11, the second three-way valve 262 is directed to the first heater 231 and connects the first heater 231 and the power component 24, the first valve 211 and the sixth valve 254 are turned on, the other valves are turned off, the power component 24 drives the heat exchange medium to flow through the first heater 231 and the first battery heat exchanger 21, and only the battery part corresponding to the first battery heat exchanger 21 is heated;
a second liquid heating mode, where as shown in FIG. 5f, the first three-way valve 261 is directed to the branch inlet of the dual-cell heat exchanger, the third three-way valve 263 is directed to the second heater 232 and connects the second heater 232 and the power component 24, the fourth valve 251, the second valve 221, and the seventh valve 255 are turned on, the other valves are turned off, the power component 24 drives the heat exchange medium to flow through the second heater 232 and the second battery heat exchanger 22, and only the battery part corresponding to the second battery heat exchanger 22 is heated;
a third liquid heating mode, where as shown in FIG. 5g, the first three-way valve 261 is directed to the branch inlet of the dual-cell heat exchanger, the second three-way valve 262 is directed to the first heater 231, the third three-way valve 263 is directed to the second heater 232, the first valve 211, the sixth valve 254, the fourth valve 251, the second valve 221, and the seventh valve 255 are turned on, the other valves are turned off, the power component 24 drives the heat exchange medium to split inti two flows, respectively flowing through the first heater 231 and the second heater 232 and simultaneously flowing through the first battery heat exchanger 21 and the second battery heat exchanger 22, and the battery parts corresponding to the first battery heat exchanger 21 and the second battery heat exchanger 22 are heated simultaneously;
a fourth liquid heating mode, where as shown in FIG. 5h, the first three-way valve 261 is directed to the branch inlet of the dual-cell heat exchanger and is short-circuited the first heat exchanger 11, the second three-way valve 262 is directed to the first heater 231, the third three-way valve 263 is directed to the second heater 232, the first valve 211, the third valve 252, the second valve 221, and the seventh valve 255 are turned on, the other valves are turned off, the power component drives the heat exchange medium to flow through the heater 23, the first battery heat exchanger 21, and the second battery heat exchanger 22 in sequence, and the battery parts corresponding to the first battery heat exchanger 21 and the second battery heat exchanger 22 are heated in sequence; and
a fifth liquid heating mode, where the first three-way valve 261 is directed to the branch inlet of the dual-cell heat exchanger, the second three-way valve 262 is directed to the first heater 231, the first valve 211 and the sixth valve 254 are turned on synchronously within a first preset time period, the third three-way valve 263 is directed to the second heater 232, and the fourth valve 251, the second valve 221, and the seventh valve 255 are turned on synchronously within a second preset time period; within the first preset time period, the power component 24 drives the heat exchange medium to flow through the first heater 231 and the first battery heat exchanger 21; and within the second preset time period, the power component 24 drives the heat exchange medium to flow through the second heater 232 and the second battery heat exchanger 22, and the battery parts corresponding to the first battery heat exchanger 21 and the battery parts corresponding to the second battery heat exchanger 22 are alternately cooled.

The first battery heat exchanger 21 and the first heater 231, the second battery heat exchanger 22 and the second heater 232 can be selected to heat the battery individually, simultaneously or alternately, as needed.

In this embodiment, the battery thermal management system further has at least one of the following operating modes:
a first uniform temperature mode, where as shown in FIG. 5i, the first three-way valve 261 is short-circuited to the first heat exchanger 11, the second three-way valve 262 is short-circuited to the first heater 231, the third three-way valve 263 is short-circuited to the second heater 232, the first valve 211, the sixth valve 254, the second valve 221, the seventh valve 255, and the fourth valve 251 are turned on, the remaining valves are turned off, and the power component 24 drives the heat exchange medium to simultaneously flow through the first battery heat exchanger 21 and the second battery heat exchanger 22;
a second uniform temperature mode, where as shown in FIG. 5j, the first three-way valve 261 is short-circuited to the first heat exchanger 11, the second three-way valve 262 is short-circuited to the first heater 231, the third three-way valve 263 is short-circuited to the second heater 232, the first valve 211, the third valve 252, the second valve 221, and the seventh valve 255 are turned on, remaining valves are turned off, and the power component 24 drives the heat exchange medium to flow through the first battery heat exchanger 21 and the second battery heat exchanger 22 in sequence; and
an energy-saving mode, where the first three-way valve 261 is short-circuited to the first heat exchanger 11, the second three-way valve 262 is short-circuited to the first heater 231, and the third three-way valve 263 is short-circuited to the second heater 232, to control turning-on and turning-off of the first valve 211 and the sixth valve 254, or control turning-on and turning-off of the second valve 221, the fourth valve 251, and the seventh valve 255; and when a temperature of a heat exchange medium is greater than a preset threshold, a corresponding valve is turned on, and the power component 24 drives the heat exchange medium to flow in the first battery heat exchanger 21 or the second battery heat exchanger 22.

As shown in FIG. 2, the battery thermal management system provided in this disclosure further includes a temperature detection element 3 located upstream or downstream of the plurality of battery heat exchange parts, to control, based on information obtained by the temperature detection element 3, whether the plurality of battery heat exchange parts work. The temperature detection element 3 can be a temperature sensor, which can monitor the temperature of the heat exchange medium at the inlet or outlet of the battery heat exchanger, thereby adjusting heating power of the heater, turning-on and turning-off of each valve or a degree of turning-on, and the like, and adjusting a flow rate and flow time of the heat exchange medium, so as to coordinately control of the first battery heat exchanger 21 and the second battery heat exchanger 22 to meet different heat exchange requirements of the battery.

The heat exchange module 1 can be any heat exchange structure capable of providing a cold source. An air conditioning module is used as an example. The air conditioning module includes a compressor 14, an ambient heat exchanger 13, an expansion valve 18, a first heat exchanger 11, and a second heat exchanger 12 connected in sequence. A reversing valve 15 is disposed between the compressor 14 and the ambient heat exchanger 13, and the reversing valve 15 is controlled to switch between the liquid cooling mode and the liquid heating mode. Gaseous high-pressure refrigerant compressed by the compressor 14 flows to one side of the ambient heat exchanger 13, and this is the cooling mode. Conversely, the gaseous high-pressure refrigerant flows to a side where the second heat exchanger 12 is located, and this is the heating mode. For details, refer to the related description of FIG. 1. The specific details are not repeated herein.

In this disclosure, the first heat exchanger 11 and the second heat exchanger 12 are connected in parallel. The first electronic expansion valve 16 is disposed on a pipeline on which the first heat exchanger 11 is disposed, and a second electronic expansion valve 17 is disposed on a pipeline on which the second heat exchanger 12 is disposed. In the liquid heat mode, the first electronic expansion valve 16 can be in a turned-off state, and the air conditioning system and the battery temperature control module 2 do not interfere with each other. As shown in FIG. 2h, the first electronic expansion valve 16 can alternatively be in a turned-on state, and the first heat exchanger 11 is connected to the battery temperature control module 2 (can be directly connected in series or connected in parallel through the first three-way valve 261). Part of heat from the battery temperature control module 2 is used for the heat exchange module 1 to realize energy recovery and effective utilization, which is especially suitable for scenarios where an ambient temperature is low, such as when the air conditioning system cannot meet heating needs of a passenger compartment.

According to a second aspect of this disclosure, an electrical device is also provided, including the battery thermal management system described above. This electrical device has all beneficial effect of the battery thermal management system, which is not elaborated further herein. The electrical device can be a vehicle, an energy storage cabinet, an unmanned aerial vehicle, and the like. This is not limited in this disclosure.

The preferred implementation of this disclosure has been described in detail above with reference to the accompanying drawings. However, this disclosure is not limited to the specific details described above. Within the technical concept of this disclosure, it is possible to make various simple modifications to the technical solution scheme of this disclosure, and these simple modifications all fall within the protection scope of this disclosure.

In addition, it should be noted that various specific technical features described in the foregoing specific implementations may be combined in any appropriate manner without contradiction. To avoid unnecessary repetition, various possible combinations are not further described in this disclosure.

## Claims

1. A battery thermal management system, comprising:
A heat exchange module (1), wherein the heat exchange module (1) has a first heat exchanger (11) used as a cold source;
a battery temperature control module (2), wherein the battery temperature control module (2) comprises a plurality of battery heat exchange parts (200); and
a heater (23), used as a heat source, wherein,
the first heat exchanger (11) and the heater (23) are selectively connected to the battery temperature control module (2), and the plurality of battery heat exchange parts (200) are selectively connected to heat exchange medium circulation of the battery temperature control module (2) separately.

2. The battery thermal management system according to claim 1, wherein the plurality of battery heat exchange parts (200) comprise a first battery heat exchange part (2001) and a second battery heat exchange part (2002), the battery temperature control module (2) comprises a battery heat exchanger (20), a plurality of flow channels (2000) of the battery heat exchanger (20) are divided into a first flow channel region (201) and a second flow channel region (202) that are independent of each other, the first flow channel region (201) forms the first battery heat exchange part (2001), and the second flow channel region (202) forms the second battery heat exchange part (2002).

3. The battery thermal management system according to claim 1, wherein the plurality of battery heat exchange parts (200) comprise a first battery heat exchange part (2001) and a second battery heat exchange part (2002), the battery temperature control module (2) comprises a first battery heat exchanger (21) and a second battery heat exchanger (22), the first battery heat exchanger (21) forms the first battery heat exchange part (2001), and the second battery heat exchanger (22) forms the second battery heat exchange part (2002).

4. The battery thermal management system according to any one of claims 1 to 3, wherein the plurality of battery heat exchange parts (200) comprise the first battery heat exchange part (2001) and the second battery heat exchange part (2002), and the first battery heat exchange part (2001) and the second battery heat exchange part (2002) are arranged in parallel.

5. The battery thermal management system according to any one of claims 1 to 3, wherein the plurality of battery heat exchange parts (200) comprise the first battery heat exchange part (2001) and the second battery heat exchange part (2002), and the first battery heat exchange part (2001) and the second battery heat exchange part (2002) are selectively connected in parallel or in series.

6. The battery thermal management system according to claim 4 or 5, wherein the heater (23) and the first heat exchanger (11) are arranged on a main road located upstream of a branch port (A), and the first battery heat exchange part (2001) and the second battery heat exchange part (2002) share the heater (23) and the first heat exchanger (11).

7. The battery thermal management system according to claim 4 or 5, wherein the battery thermal management system comprises a first heater (231) and a second heater (232), the first heater (231) and the second heater (232) are respectively disposed on corresponding parallel branches to heat heat exchange media flowing into the first battery heat exchange part (2001) and the second battery heat exchange part (2002) respectively.

8. The battery thermal management system according to claim 4 or 5, wherein first heat exchangers (11) are respectively disposed on parallel branches on which the first battery heat exchange part(2001) and the second battery heat exchange part (2002) are located, and the first heat exchangers (11) are connected in parallel on the corresponding parallel branches.

9. The battery thermal management system according to claim 7 or 8, wherein the battery thermal management system further comprises a third heater (233), the third heater (233) is disposed on a main road located upstream of a branch port (A), and the first heater (231), the second heater (232), and the third heater (233) are selectively connected to the battery temperature control module (2).

10. The battery thermal management system according to any one of claims 1 to 9, wherein the plurality of battery heat exchange parts (200) comprise the first battery heat exchange part (2001) and the second battery heat exchange part (2002), and the first battery heat exchange part (2001) and the second battery heat exchange part (2002) are respectively disposed in different parts of a battery.

11. The battery thermal management system according to any one of claims 1 to 10, wherein the battery temperature control module (2) comprises a power component (24) configured to drive a heat exchange medium to circulate and the first battery heat exchanger (21) and the second battery heat exchanger (22) connected in parallel, a first valve (211) is disposed on a first parallel branch (41) on which the first battery heat exchanger (21) is located, a second valve (221) is disposed on a second parallel branch (42) on which the second battery heat exchanger (22) is located, and the first heat exchanger (11) and the heater (23) are disposed on the main road located upstream of the branch port (A) and are connected in parallel through a first three-way valve (261).

12. The battery thermal management system according to claim 11, wherein the battery thermal management system has at least one of the following modes:
a first liquid cooling mode, wherein the first three-way valve (261) connects the first heat exchanger (11) and the power component (24), the first valve (211) is turned on, the second valve (221) is turned off, and the power component (24) drives the heat exchange medium to flow through the first heat exchanger (11) and the first battery heat exchanger (21);
a second liquid cooling mode, wherein the first three-way valve (261) connects the first heat exchanger (11) and the power component (24), the first valve (211) is turned off, the second valve (221) is turned on, and the power component (24) drives the heat exchange medium to flow through the first heat exchanger (11) and the second battery heat exchanger (22);
a third liquid cooling mode, wherein the first three-way valve (261) connects the first heat exchanger (11) and the power component (24), the first valve (211) is turned on, the second valve (221) is turned on, and the power component (24) drives the heat exchange medium to flow through the first heat exchanger (11) and then split into two flows, simultaneously flowing through the first battery heat exchanger (21) and the second battery heat exchanger (22);
a fourth liquid cooling mode, wherein the first three-way valve (261) connects the first heat exchanger (11) and the power component (24); within a first preset time period, the first valve (211) is turned on, the second valve (221) is turned off, and the power component (24) drives the heat exchange medium to flow through the first heat exchanger (11) and the first battery heat exchanger (21); and within a second preset time period, the first valve (211) is turned off, the second valve (221) is turned on, and the power component (24) drives the heat exchange medium to flow through the first heat exchanger (11) and the second battery heat exchanger (22);
a first liquid heating mode, wherein the first three-way valve (261) connects the heater (23) and the power component (24), the heater (23) performs heating, the first valve (211) is turned on, the second valve (221) is turned off, and the power component (24) drives the heat exchange medium to flow through the heater (23) and the first battery heat exchanger (21);
a second liquid heating mode, wherein the first three-way valve (261) connects the heater (23) and the power component (24), the heater (23) performs heating, the first valve (211) is turned off, the second valve (221) is turned on, and the power component (24) drives the heat exchange medium to flow through the heater (23) and the second battery heat exchanger (22);
a third liquid heating mode, wherein the first three-way valve (261) connects the heater (23) and the power component (24), the heater (23) performs heating, the first valve (211) is turned on, the second valve (221) is turned on, and the power component (24) drives the heat exchange medium to flow through the heater (23) and then split into two flows, simultaneously flowing through the first battery heat exchanger (21) and the second battery heat exchanger (22);
a fourth liquid heating mode, wherein the first three-way valve (261) connects the heater (23) and the power component (24), and the heater (23) performs heating; within a first preset time period, the first valve (211) is turned on, the second valve (221) is turned off, and the power component (24) drives the heat exchange medium to flow through the heater (23) and the first battery heat exchanger (21); and within a second preset time period, the first valve (211) is turned off, the second valve (221) is turned on, and the power component (24) drives the heat exchange medium to flow through the heater (23) and the second battery heat exchanger (22);
a uniform temperature mode, wherein the first three-way valve (261) connects the heater (23) and the power component (24), the heater (23) is turned off from heating, the first valve (211) is turned on, the second valve (221) is turned on, and the power component (24) drives the heat exchange medium to flow between the first battery heat exchanger (21) and the second battery heat exchanger (22); and
an energy-saving mode, wherein the first three-way valve (261) connects the heater (23) and the power component (24), the heater (23) is turned off from heating, and the power component (24) drives the heat exchange medium to flow in the first battery heat exchanger (21) or the second battery heat exchanger (22).

13. The battery thermal management system according to any one of claims 1 to 10, wherein the battery temperature control module (2) comprises a power component (24) configured to drive a heat exchange medium to circulate and the first battery heat exchanger (21) and the second battery heat exchanger (22) connected in parallel, a first valve (211) is disposed on a first parallel branch (41) on which the first battery heat exchanger (21) is located, a second valve (221) is disposed on a second parallel branch (42) on which the second battery heat exchanger (22) is located, the first heat exchanger (11) is located on the main road located upstream of the branch port (A) and is selectively connected through a first three-way valve (261), the battery thermal management system comprises the first heater (231) and the second heater (232), the first heater (231) is disposed on the first parallel branch (41) through a second three-way valve (262), and the second heater (232) is disposed on the second parallel branch (42) through a third three-way valve (263).

14. The battery thermal management system according to claim 13, wherein the battery thermal management system has at least one of the following modes:
a first liquid cooling mode, wherein the first three-way valve (261) connects the first heat exchanger (11) and the power component (24), the second three-way valve (262) is short-circuited to the first heater (231), the third three-way valve (263) is turned off, the first valve (211) is turned on, the second valve (221) is turned off, and the power component (24) drives the heat exchange medium to flow through the first heat exchanger (11) and the first battery heat exchanger (21);
a second liquid cooling mode, wherein the first three-way valve (261) connects the first heat exchanger (11) and the power component (24), the second three-way valve (262) is turned off, the third three-way valve (263) is short-circuited to the second heater (232), the first valve (211) is turned off, the second valve (221) is turned on, and the power component (24) drives the heat exchange medium to flow through the first heat exchanger (11) and the second battery heat exchanger (22);
a third liquid cooling mode, wherein the first three-way valve (261) connects the first heat exchanger (11) and the power component (24), the second three-way valve (262) is short-circuited to the first heater (231), the third three-way valve (263) is short-circuited to the second heater (232), the first valve (211) is turned on, the second valve (221) is turned on, and the power component (24) drives the heat exchange medium to flow through the first heat exchanger (11) and then split into two flows, simultaneously flowing through the first battery heat exchanger (21) and the second battery heat exchanger (22);
a fourth liquid cooling mode, wherein the first three-way valve (261) connects the first heat exchanger (11) and the power component (24); within a first preset time period, the second three-way valve (262) is short-circuited to the first heater (231), the third three-way valve (263) is turned off, the first valve (211) is turned on, the second valve (221) is turned off, and the power component (24) drives the heat exchange medium to flow through the first heat exchanger (11) and the first battery heat exchanger (21); and within a second preset time period, the second three-way valve (262) is turned off, the third three-way valve (263) is short-circuited to the second heater (232), the first valve (211) is turned off, the second valve (221) is turned on, and the power component (24) drives the heat exchange medium to flow through the first heat exchanger (11) and the second battery heat exchanger (22);
a first liquid heating mode, wherein the first three-way valve (261) is short-circuited to the first heat exchanger (11), the second three-way valve (262) is directed to the first heater (231), the third three-way valve (263) is turned off, the first heater (231) performs heating, the first valve (211) is turned on, the second valve (221) is turned off, and the power component (24) drives the heat exchange medium to flow through the first heater (231) and the first battery heat exchanger (21);
a second liquid heating mode, wherein the first three-way valve (261) is short-circuited to the first heat exchanger (11), the second three-way valve (262) is turned off, the third three-way valve (263) is directed to the second heater (232), the second heater (232) performs heating, the first valve (211) is turned off, the second valve (221) is turned on, and the power component (24) drives the heat exchange medium to flow through the second heater (232) and the second battery heat exchanger (22);
a third liquid heating mode, wherein the first three-way valve (261) is short-circuited to the first heat exchanger (11), the second three-way valve (262) is directed to the first heater (231), the third three-way valve (263) is directed to the second heater (232), the first heater (231) and the second heater (232) heat perform heating, the first valve (211) is turned on, and the second valve (221) is turned on, and the power component (24) drives the heat exchange medium to flow through the heater (23) and then split into two flows, simultaneously flowing through the first battery heat exchanger (21) and the second battery heat exchanger (22);
a fourth liquid heating mode, wherein the first three-way valve (261) is short-circuited to the first heat exchanger (11); within a first preset time period, the second three-way valve (262) is directed to the first heater (231), the third three-way valve (263) is turned off, the first heater (231) performs heating, the first valve (211) is turned on, the second valve (221) is turned off, and the power component (24) drives the heat exchange medium to flow through the first heater (231) and the first battery heat exchanger (21); and within a second preset time period, the first three-way valve (261) is short-circuited to the first heat exchanger (11), the second three-way valve (262) is turned off, the third three-way valve (263) is directed to the second heater (232), the second heater (232) performs heating, the first valve (211) is turned off, the second valve (221) is turned on, and the power component (24) drives the heat exchange medium to flow through the second heater (232) and the second battery heat exchanger (22); a uniform temperature mode, wherein the first three-way valve (261) is short-circuited to the first heat exchanger (11), the second three-way valve (262) is short-circuited to the first heater (231), the third three-way valve (263) is short-circuited to the second heater (232), the first valve (211) is turned on, the second valve (221) is turned on, and the power component (24) drives the heat exchange medium to flow between the first battery heat exchanger (21) and the second battery heat exchanger (22); and
an energy-saving mode, wherein the first three-way valve (261) is short-circuited to the first heat exchanger (11), the second three-way valve (262) is short-circuited to the first heater (231), the third three-way valve (263) is short-circuited to the second heater (232), and the power component (24) drives the heat exchange medium to flow in the first battery heat exchanger (21) or the second battery heat exchanger (22).

15. The battery thermal management system according to any one of claims 1 to 10, wherein the battery temperature control module (2) comprises a power component (24) configured to drive a heat exchange medium to circulate and the first battery heat exchanger (21) and the second battery heat exchanger (22) connected in parallel, a first valve (211) is disposed on a first parallel branch (41) on which the first battery heat exchanger (21) is located, a second valve (221) is disposed on a second parallel branch (42) on which the second battery heat exchanger (22) is located, and the first heat exchanger (11) and/or the heater (23) are/is disposed between the power component (24) and the battery heat exchanger (20).

16. The battery thermal management system according to claim 15, wherein the battery thermal management system comprises a sixth valve (254) connecting the first valve (211) and the power component (24); and
the battery thermal management system has a first mode in which the first valve (211) and the sixth valve (254) are turned on, and the power component (24) drives the heat exchange medium to flow through the first heat exchanger (11) and/or the heater (23) and then into the first battery heat exchanger (21).

17. The battery thermal management system according to claim 15 or 16, wherein the battery thermal management system comprises a second parallel loop (52) connecting the second valve (221) and the power component (24), a seventh valve (255) is disposed on the second parallel loop (52), and a fourth valve (251) is disposed between the first parallel branch (41) and the second battery heat exchanger (22); and
the battery thermal management system has a second mode in which the fourth valve (251), the second valve (221), and a seventh valve (255) are turned on, and the power component (24) drives the heat exchange medium to flow through the first heat exchanger (11) and/or the heater (23) and then into the second battery heat exchanger (22).

18. The battery thermal management system according to any one of claims 15 to 17, wherein the battery thermal management system comprises a first parallel loop (51) connecting the first valve (211) and the power component (24), the sixth valve (254) is disposed on the first parallel loop (51), the seventh valve (255) is disposed on the second parallel loop (52) connecting the second valve (221) and the power component (24), and the fourth valve (251) is disposed between the first parallel branch (41) and the second battery heat exchanger (22); and
the battery thermal management system has a third mode in which the first valve (211), the sixth valve (254), the second valve (221), the seventh valve (255), and the fourth valve (251) are turned on, and the power component (24) drives the heat exchange medium to flow through the first heat exchanger (11) and/or the heater (23) and then split into two flows, simultaneously flowing through the first battery heat exchanger (21) and the second battery heat exchanger (22).

19. The battery thermal management system according to any one of claims 15 to 18, wherein the battery thermal management system further comprises a third parallel branch (25) connected in parallel between the first battery heat exchanger (21) and the second battery heat exchanger (22), a third valve (252) is disposed on the third parallel branch (25), and the seventh valve (255) is disposed on the second parallel loop (52) connecting the second valve (221) and the power component (24); and
the battery thermal management system has a fourth mode in which the first valve (211), the third valve (252), the second valve (221), and the seventh valve (255) are turned on, and the power component (24) drives the heat exchange medium to flow through the first heat exchanger (11) and/or the heater (23), the first battery heat exchanger (21), and the second battery heat exchanger (22) in sequence.

20. The battery thermal management system according to any one of claims 15 to 19, wherein the heater (23) and/or the first heat exchanger (11) are disposed on the main road located upstream of the branch port (A) and are connected in parallel through a first three-way valve (261).

21. The battery thermal management system according to any one of claims 15 to 19, wherein the battery thermal management system comprises the first heater (231) and the second heater (232), the first heater (231) and/or the first heat exchanger (11) are disposed on the first parallel branch (41) through a second three-way valve (262), and the second heater (232) and/or the first heat exchanger (11) are disposed on the second parallel branch (42) through a third three-way valve (263).

22. The battery thermal management system according to any one of claims 1 to 21, wherein the battery temperature control module (2) comprises the power component (24) configured to drive the heat exchange medium to circulate, the first battery heat exchanger (21) and the second battery heat exchanger (22) connected in parallel, the first valve (211) is disposed on the first parallel branch (41) on which the first battery heat exchanger (21) is located, the second valve (221) is disposed on the second parallel branch (42) on which the second battery heat exchanger (22) is located, and the first heat exchanger (11) and the heater (23) are disposed on the main road located upstream of the branch port (A) and are connected in parallel through the first three-way valve (261);
the battery thermal management system further comprises the third parallel branch (25) connected in parallel between the first battery heat exchanger (21) and the second battery heat exchanger (22), and the third valve (252) is disposed on the third parallel branch (25);
the fourth valve (251) is disposed on a pipeline connecting the first parallel branch (41) and the third parallel branch (25), and a fifth valve (253) is disposed on a pipeline connecting the second parallel branch (42) and the third parallel branch (25); and
the sixth valve (254) is disposed on the first parallel loop (51) connecting the first valve (211) and the power component (24), the seventh valve (255) is disposed on the second parallel loop (52) connecting the second valve (221) and the power component (24), and the first parallel loop (51) and the second parallel loop (52) are arranged in parallel.

23. The battery thermal management system according to claim 22, wherein the battery thermal management system has at least one of the following modes:
the first liquid cooling mode, wherein the first three-way valve (261) connects the first heat exchanger (11) and the power component (24), the first valve (211) and the sixth valve (254) are turned on, remaining valves are turned off, and the power component (24) drives the heat exchange medium to flow through the first heat exchanger (11) and the first battery heat exchanger (21);
the second liquid cooling mode, wherein the first three-way valve (261) connects the first heat exchanger (11) and the power component (24), the fourth valve (251), the second valve (221), and the seventh valve (255) are turned on, remaining valves are turned off, and the power component (24) drives the heat exchange medium to flow through the first heat exchanger (11) and the second battery heat exchanger (22);
the third liquid cooling mode, wherein the first three-way valve (261) connects the first heat exchanger (11) and the power component (24), the first valve (211), the sixth valve (254), the second valve (221), the seventh valve (255), and the fourth valve (251) are turned on, remaining valves are turned off, and the power component (24) drives the heat exchange medium to flow through the first heat exchanger (11) and then split into two flows, simultaneously flowing through the first battery heat exchanger (21) and the second battery heat exchanger (22);
the fourth liquid cooling mode, wherein the first three-way valve (261) connects the first heat exchanger (11) and the power component (24), the first valve (211), the third valve (252), the second valve (221), and the seventh valve (255) are turned on, remaining valves are turned off, and the power component (24) drives the heat exchange medium to flow through the first heat exchanger (11), the first battery heat exchanger (21), and the second battery heat exchanger (22) in sequence;
a fifth liquid cooling mode, wherein the first three-way valve (261) connects the first heat exchanger (11) and the power component (24); within the first preset time period, the first valve (211) and the sixth valve (254) are turned on, remaining valves are turned off, and the power component (24) drives the heat exchange medium to flow through the first heat exchanger (11) and the first battery heat exchanger (21); and within the second preset time period, the fourth valve (251), the second valve (221), and the seventh valve (255) are turned on, remaining valves are turned off, and the power component (24) drives the heat exchange medium to flow through the first heat exchanger (11) and the second battery heat exchanger (22);
the first liquid heating mode, wherein the first three-way valve (261) connects the heater (23) and the power component (24), the heater (23) performs heating, the first valve (211) and the sixth valve (254) are turned on, remaining valves are turned off, and the power component (24) drives the heat exchange medium to flow through the heater (23) and the first battery heat exchanger (21);
the second liquid heating mode, wherein the first three-way valve (261) connects the heater (23) and the power component (24), the heater (23) performs heating, the fourth valve (251), the second valve (221), and the seventh valve (255) are turned on, remaining valves are turned off, and the power component (24) drives the heat exchange medium to flow through the heater (23) and the second battery heat exchanger (22);
the third liquid heating mode, wherein the first three-way valve (261) connects the heater (23) and the power component (24), the heater (23) performs heating, the first valve (211), the sixth valve (254), the second valve (221), the seventh valve (255), and the fourth valve (251) are turned on, remaining valves are turned off, and the power component (24) drives the heat exchange medium to flow through the heater (23) and then split into two flows, simultaneously flowing through the first battery heat exchanger (21) and the second battery heat exchanger (22);
the fourth liquid heating mode, wherein the first three-way valve (261) connects the heater (23) and the power component (24), the heater (23) performs heating, the first valve (211), the third valve (252), the second valve (221), and the seventh valve (255) are turned on, remaining valves are turned off, and the power component (24) drives the heat exchange medium to flow through the heater (23), the first battery heat exchanger (21), and the second battery heat exchanger (22) in sequence;
a fifth liquid heating mode, wherein the first three-way valve (261) connects the heater (23) and the power component (24), and the heater (23) performs heating; within the first preset time period, the first valve (211) and the sixth valve (254) are turned on, remaining valves are turned off, and the power component (24) drives the heat exchange medium to flow through the heater (23) and the first battery heat exchanger (21); and within the second preset time period, the fourth valve (251), the second valve (221), and the seventh valve (255) are turned on, remaining valves are turned off, and the power component (24) drives the heat exchange medium to flow through the heater (23) and the second battery heat exchanger (22);
a first uniform temperature mode, wherein the first three-way valve (261) connects the heater (23) and the power component (24), the heater (23) is turned off, the first valve (211), the sixth valve (254), the second valve (221), the seventh valve (255), and the fourth valve (251) are turned on, remaining valves are turned off, and the power component (24) drives the heat exchange medium to simultaneously flow through the first battery heat exchanger (21) and the second battery heat exchanger (22);
a second uniform temperature mode, wherein the first three-way valve (261) connects the heater (23) and the power component (24), the heater (23) is turned off, the first valve (211), the third valve (252), the second valve (221), and the seventh valve (255) are turned on, remaining valves are turned off, and the power component (24) drives the heat exchange medium to flow through the first battery heat exchanger (21) and the second battery heat exchanger (22) in sequence; and
the energy-saving mode, wherein the first three-way valve (261) connects the heater (23) and the power component (24), the heater (23) is turned off from heating, and the power component (24) drives the heat exchange medium to flow in the first battery heat exchanger (21) or the second battery heat exchanger (22).

24. The battery thermal management system according to any one of claims 1 to 21, wherein the battery temperature control module (2) comprises the power component (24) configured to drive a heat exchange medium to circulate and the first battery heat exchanger (21) and the second battery heat exchanger (22) connected in parallel, the first valve (211) is disposed on the first parallel branch (41) on which the first battery heat exchanger (21) is located, and the second valve (221) is disposed on a second parallel branch (42) on which the second battery heat exchanger (22) is located;
the first heat exchanger (11) is located on the main road located upstream of the branch port (A) and is selectively connected through the first three-way valve (261), the battery thermal management system comprises the first heater (231) and the second heater (232), the first heater (231) is disposed on the first parallel branch (41) through the second three-way valve (262), and the second heater (232) is disposed on the second parallel branch (42) through the third three-way valve (263);
the battery thermal management system further comprises the third parallel branch (25) connected in parallel between the first battery heat exchanger (21) and the second battery heat exchanger (22), and the third valve (252) is disposed on the third parallel branch (25);
the fourth valve (251) is disposed on the pipeline connecting the first parallel branch (41) and the third parallel branch (25), and the fifth valve (253) is disposed on the pipeline connecting the second parallel branch (42) and the third parallel branch (25); and
the sixth valve (254) is disposed on the first parallel loop (51) connecting the first valve (211) and the power component (24), the seventh valve (255) is disposed on the second parallel loop (52) connecting the second valve (221) and the power component (24), and the first parallel loop (51) and the second parallel loop (52) are arranged in parallel.

25. The battery thermal management system according to claim 24, wherein the battery thermal management system has at least one of the following modes:
the first liquid cooling mode, wherein the first three-way valve (261) connects the first heat exchanger (11) and the power component (24), the second three-way valve (262) is short-circuited to the first heater (231), the third three-way valve (263) is turned off, the first valve (211) and the sixth valve (254) are turned on, remaining valves are turned off, and the power component (24) drives the heat exchange medium to flow through the first heat exchanger (11) and the first battery heat exchanger (21);
the second liquid cooling mode, wherein the first three-way valve (261) connects the first heat exchanger (11) and the power component (24), the second three-way valve (262) is turned off, the third three-way valve (263) is short-circuited to the second heater (232), the fourth valve (251), the second valve (221), and the seventh valve (255) are turned on, remaining valves are turned off, and the power component (24) drives the heat exchange medium to flow through the first heat exchanger (11) and the second battery heat exchanger (22);
the third liquid cooling mode, wherein the first three-way valve (261) connects the first heat exchanger (11) and the power component (24), the second three-way valve (262) is short-circuited to the first heater (231), the third three-way valve (263) is short-circuited to the second heater (232), the first valve (211), the sixth valve (254), the second valve (221), the seventh valve (255), and the fourth valve (251) are turned on, remaining valves are turned off, and the power component (24) drives the heat exchange medium to flow through the first heat exchanger (11) and then split into two flows, simultaneously flowing through the first battery heat exchanger (21) and the second battery heat exchanger (22);
the fourth liquid cooling mode, wherein the first three-way valve (261) connects the first heat exchanger (11) and the power component (24), the second three-way valve (262) is short-circuited to the first heater (231), the third three-way valve (263) is short-circuited to the second heater (232), the first valve (211), the third valve (252), the second valve (221), and the seventh valve (255) are turned on, remaining valves are turned off, and the power component (24) drives the heat exchange medium to flow through the first heat exchanger (11), the first battery heat exchanger (21), and the second battery heat exchanger (22) in sequence;
the fifth liquid cooling mode, wherein the first three-way valve (261) connects the first heat exchanger (11) and the power component (24); within the first preset time period, the second three-way valve (262) is short-circuited to the first heater (231), the third three-way valve (263) is turned off, the first valve (211) and the sixth valve (254) are turned on, remaining valves are turned off, and the power component (24) drives the heat exchange medium to flow through the first heat exchanger (11) and the first battery heat exchanger (21); and within the second preset time period, the second three-way valve (262) is turned off, the third three-way valve (263) is short-circuited to the second heater (232), the fourth valve (251), the second valve (221), and the seventh valve (255) are turned on, remaining valves are turned off, and the power component (24) drives the heat exchange medium to flow through the first heat exchanger (11) and the second battery heat exchanger (22);
the first liquid heating mode, wherein the first three-way valve (261) is short-circuited to the first heat exchanger (11), the second three-way valve (262) is directed to the first heater (231), the third three-way valve (263) is turned off, the first heater (231) performs heating, the first valve (211) and the sixth valve (254) are turned on, remaining valves are turned off, and the power component (24) drives the heat exchange medium to flow through the first heater (231) and the first battery heat exchanger (21);
the second liquid heating mode, wherein the first three-way valve (261) is short-circuited to the first heat exchanger (11), the second three-way valve (262) is turned off, the third three-way valve (263) is directed to the second heater (232), the second heater (232) performs heating, the fourth valve (251), the second valve (221), and the seventh valve (255) are turned on, remaining valves are turned off, and the power component (24) drives the heat exchange medium to flow through the heater (23) and the second battery heat exchanger (22);
the third liquid heating mode, wherein the first three-way valve (261) is short-circuited to the first heat exchanger (11), the second three-way valve (262) is directed to the first heater (231), the third three-way valve (263) is directed to the second heater (232), the first heater (231) and the second heater (232) perform heating, the first valve (211), the sixth valve (254), the second valve (221), the seventh valve (255), and the fourth valve (251) are turned on, remaining valves are turned off, and the power component (24) drives the heat exchange medium to flow into two flows, respectively flowing into the first heater (231) and the second heater (232) for heating, and simultaneously flowing through the first battery heat exchanger (21) and the second battery heat exchanger (22);
the fourth liquid heating mode, wherein the first three-way valve (261) is short-circuited to the first heat exchanger (11), the second three-way valve (262) is directed to the first heater (231), the third three-way valve (263) is directed to the second heater (232), the first heater (231) and the second heater (232) perform heating, the first valve (211), the third valve (252), the second valve (221), and the seventh valve (255) are turned on, remaining valves are turned off, and the power component (24) drives the heat exchange medium to flow through the first heater (231), the first battery heat exchanger (21), the second heater (232), and the second battery heat exchanger (22) in sequence;
the fifth liquid heating mode, wherein the first three-way valve (261) is short-circuited to the first heat exchanger (11); within the first preset time period, the second three-way valve (262) is directed to the first heater (231), the third three-way valve (263) is turned off, the first heater (231) performs heating, the first valve (211) and the sixth valve (254) are turned on, remaining valves are turned off, and the power component (24) drives the heat exchange medium to flow through the first heater (231) and the first battery heat exchanger (21); and within the second preset time period, the second three-way valve (262) is turned off, the third three-way valve (263) is directed to the second heater (232), the second heater (232) is heated, the fourth valve (251), the second valve (221), and the seventh valve (255) are turned on, remaining valves are turned off, and the power component (24) drives the heat exchange medium to flow through the heater (23) and the second battery heat exchanger (22);
the first uniform temperature mode, wherein the first three-way valve (261) is short-circuited to the first heat exchanger (11), the second three-way valve (262) is short-circuited to the first heater (231), the third three-way valve (263) is short-circuited to the second heater (232), the first valve (211), the sixth valve (254), the second valve (221), the seventh valve (255), and the fourth valve (251) are turned on, remaining valves are turned off, and the power component (24) drives the heat exchange medium to simultaneously flow through the first battery heat exchanger (21) and the second battery heat exchanger (22);
the second uniform temperature mode, wherein the first three-way valve (261) is short-circuited to the first heat exchanger (11), the second three-way valve (262) is short-circuited to the first heater (231), the third three-way valve (263) is short-circuited to the second heater (232), the first valve (211), the third valve (252), the second valve (221), and the seventh valve (255) are turned on, remaining valves are turned off, and the power component (24) drives the heat exchange medium to flow through the first battery heat exchanger (21) and the second battery heat exchanger (22) in sequence; and
the energy-saving mode, wherein the first three-way valve (261) is short-circuited to the first heat exchanger (11), the second three-way valve (262) is short-circuited to the first heater (231), the third three-way valve (263) is short-circuited to the second heater (232), and the power component (24) drives the heat exchange medium to flow in the first battery heat exchanger (21) or the second battery heat exchanger (22).

26. The battery thermal management system according to any one of claims 1 to 25, wherein the heat exchange module (1) comprises a compressor (14), an ambient heat exchanger (13), an expansion valve (18), the first heat exchanger (11) and the second heat exchanger (12) connected in sequence, and a four-way reversing valve (15) is disposed between the compressor (14) and the ambient heat exchanger (13).

27. The battery thermal management system according to claim 26, wherein the first heat exchanger (11) and the second heat exchanger (12) are connected in parallel, a first electronic expansion valve (16) is disposed on a pipeline on which the first heat exchanger (11) is disposed, and a second electronic expansion valve (17) is disposed on a pipeline on which the second heat exchanger (12) is disposed.

28. The battery thermal management system according to claim 27, wherein, in the liquid heating mode:
the first electronic expansion valve (16) is turned off, and the battery temperature control module (2) and the heat exchange module (1) are independent of each other; and
the first electronic expansion valve (16) is turned on, the first heat exchanger (11) is connected to the battery temperature control module (2), and part of heat from the battery temperature control module (2) is used for the heat exchange module (1).

29. The battery thermal management system according to any one of claims 1 to 28, wherein the battery thermal management system further comprises a temperature detection element (3) disposed upstream or downstream of the plurality of battery heat exchange parts (200) to control, based on information obtained by the temperature detection element (3), whether the plurality of battery heat exchange parts (200) work.

30. An electrical appliance, comprising the battery thermal management system according to any one of claims 1 to 29.
